# FASCICULE DE BREVET EUROPEEN

(11) **EP 4 508 359 B1**
(45) Date de publication et mention de la délivrance du brevet: **25.03.2026**
(21) Numéro de dépôt: 23717920.5
(22) Date de dépôt: 06.04.2023
(51) Int. Cl.: F17C 3/02

(54) **PAROI POUR UNE CUVE ÉTANCHE ET THERMIQUEMENT ISOLANTE**
WAND FÜR EIN LECKDICHTES UND WÄRMEISOLIERENDES GEFÄSS
WALL FOR A LEAKTIGHT AND THERMALLY INSULATING VESSEL

(30) Priorité: 15.04.2022 FR 2203556
(43) Date de publication de la demande: 19.02.2025
(73) Titulaire: GAZTRANSPORT ET TECHNIGAZ, 78470 Saint-Rémy-lès-Chevreuse (FR)
(72) Inventeur: DE COMBARIEU, Guillaume, 78470 SAINT-REMY-LES-CHEVREUSE (FR); SALMON LEGAGNEUR, Guillaume, 78470 SAINT-REMY-LES-CHEVREUSE (FR); MOREL, Benoît, 78470 SAINT-REMY-LES-CHEVREUSE (FR)
(74) Mandataire: Loyer & Abello
(86) Numéro de dépôt international: PCT/EP2023/059281
(87) Numéro de publication internationale: WO 2023/198637

(56) Documents cités:
- EP-A2- 1 898 143
- EP-A2- 2 859 267
- WO-A2-2015/001230
- KR-A- 20120 134 596

## Description

### Domaine technique

L'invention se rapporte au domaine des cuves étanches et thermiquement isolantes. En particulier, l'invention se rapporte au domaine des cuves étanches et thermiquement isolantes pour le stockage et/ou le transport d'un gaz liquéfié, tel que l'hydrogène liquide qui est à environ -253°C à pression atmosphérique.

### Arrière-plan technologique

Dans l'état de la technique, il est connu des cuves étanches et thermiquement isolantes de stockage d'un gaz liquéfié, tel que du gaz naturel liquéfié (GNL).

Le document EP2859267 divulgue une cuve dans laquelle les parois présentent une structure multicouche, c'est-à-dire présentent successivement, dans la direction d'épaisseur de la paroi, depuis l'extérieur vers l'intérieur, une barrière thermiquement isolante secondaire retenue à la structure porteuse, une membrane d'étanchéité secondaire reposant contre la barrière thermiquement isolante secondaire, une barrière thermiquement isolante primaire reposant contre la membrane d'étanchéité secondaire et une membrane d'étanchéité primaire destinée à être en contact avec le gaz naturel liquéfié contenu dans la cuve.

La barrière thermiquement isolante primaire comporte une pluralité d'éléments calorifuges qui comportent un panneau de couvercle de forme rectangulaire ou carrée et une pluralité de piliers porteurs fixés sur une face inférieure du panneau de couvercle, perpendiculairement à celui-ci. La barrière thermiquement isolante comporte également un cadre qui est formé par des traverses et qui entoure le panneau de couvercle. Chaque traverse est équipée d'une plaque d'ancrage qui repose également dans un lamage ménagé dans la paroi de couvercle.

La membrane d'étanchéité primaire présente un réseau d'ondulations perpendiculaires permettant de lui conférer une élasticité dans toutes les directions du plan. Elle est construite à partir de plaques de tôle rectangulaires qui sont soudées à recouvrement le long de leurs bords. De plus, les plaques de tôle sont posées sur les panneaux de couvercle et leurs bords sont soudés sur les plaques d'ancrage équipant les traverses formant le cadre.

La demanderesse a constaté que, dans une cuve du type précité, les ondulations de la membrane d'étanchéité primaire n'étaient pas sollicitées de manière uniforme. En particulier, dans la mesure où la barrière thermiquement isolante primaire est discontinue, c'est-à-dire qu'elle est constituée d'éléments calorifuges juxtaposés les uns aux autres et supportant chacun une pluralité de zones planes de la membrane d'étanchéité primaire, son comportement n'est pas homogène lorsque la structure porteuse se déforme et/ou sous l'effet des sollicitations thermiques et mécaniques générées par le gaz liquéfié stocké dans la cuve. En particulier, la demanderesse a constaté que les ondulations qui sont disposées dans une zone à cheval entre une première plaque d'ancrage fixée à un premier élément calorifuge et une deuxième plaque d'ancrage fixée à un deuxième élément calorifuge, adjacent au premier, sont sollicitées de manière plus importantes que les autres ondulations qui s'étendent entre deux plaques d'ancrage fixées à un même élément calorifuge. De plus, les surfaces planes de la membrane d'étanchéité primaire frottent contre les panneaux de couvercle des éléments calorifuge ce qui nuit également à l'homogénéité de la répartition des contraintes. En outre, certaines ondulations se déforment plus que d'autres afin de compenser des déplacements supérieurs à ceux auxquels sont exposées les autres ondulations. Or, il est important, d'assurer une répartition la plus uniforme possible des contraintes entre les ondulations de la membrane d'étanchéité primaire, notamment en vue d'optimiser sa durée de vie. Cet inconvénient est d'autant plus critique que la température de stockage du gaz liquéfié est faible et qu'en conséquence les sollicitations thermiques s'exerçant sur la membrane d'étanchéité primaire sont importantes.

Par ailleurs, les performances d'isolation thermique des cuves du type précité sont insuffisantes pour leur permettre le stockage d'un gaz liquéfié à très faible température, tel que l'hydrogène liquide, à moins d'augmenter très sensiblement l'épaisseur des barrières thermiquement isolantes, ce qui n'est pas souhaitable.

### Résumé

Une idée à la base de l'invention est de proposer une paroi pour une cuve étanche et thermiquement isolante comprenant une membrane d'étanchéité primaire ondulée et dans laquelle les contraintes subies par la membrane d'étanchéité primaires soient le plus uniformément réparties entre les ondulations de celle-ci.

Selon un mode de réalisation, l'invention fournit une paroi pour une cuve étanche et thermiquement isolante de stockage d'un gaz liquéfié, la paroi comportant successivement, selon une direction d'épaisseur, une barrière thermiquement isolante secondaire qui repose contre une structure porteuse, une membrane d'étanchéité secondaire qui repose contre la barrière thermiquement isolante secondaire, une barrière thermiquement isolante primaire qui repose contre la membrane d'étanchéité secondaire et une membrane d'étanchéité primaire qui repose contre la barrière thermiquement isolante primaire et est destinée à être en contact avec le gaz liquéfié contenu dans la cuve, la membrane d'étanchéité primaire comportant une première série d'ondulations présentant des premières ondulations parallèles les unes aux autres et une deuxième séries d'ondulations présentant des deuxièmes ondulations parallèles les unes aux autres et perpendiculaires aux premières ondulations, la membrane d'étanchéité primaire comportant une pluralité de zones planes qui sont chacune définies entre deux premières ondulations adjacentes et entre deux deuxièmes ondulations adjacentes ;
la barrière thermiquement isolante primaire comportant au moins une première rangée d'éléments porteurs comportant successivement, selon une direction parallèle aux premières ondulations, au moins un premier, un deuxième et un troisième éléments porteurs qui sont fixés à la barrière thermiquement isolante secondaire et qui s'élèvent selon la direction d'épaisseur, le premier, le deuxième et le troisième éléments porteurs étant respectivement fixés à un premier, un deuxième et un troisième plateaux internes, la pluralité de zones planes comportant successivement, selon la direction parallèle aux premières ondulations, une première, une deuxième et une troisième zones planes qui sont respectivement soudées en appui contre le premier, le deuxième et le troisième plateaux internes.

Grâce à ces caractéristiques, les trois éléments porteurs précités forment trois structures de support discrètes qui ne sont pas reliées rigidement les unes aux autres et qui supportent chacune une zone plane de la membrane d'étanchéité primaire. Ceci permet une bonne répartition des contraintes entre les ondulations de la membrane d'étanchéité primaire et plus particulièrement entre les ondulations disposées de part et d'autre des première, deuxième et troisièmes zones planes précitées.

L'adverbe "successivement" signifie "l'un après l'autre, l'un venant à la suite de l'autre". Ainsi, on entend par "une première rangée d'éléments porteurs comportant successivement, selon une direction parallèle aux premières ondulations, au moins un premier, un deuxième et un troisième éléments porteurs" qu'aucun autre élément porteur de ladite première rangée n'est interposé entre le premier et le deuxième éléments porteurs et entre le deuxième et le troisième éléments porteurs. De même, on entend par "la pluralité de zones planes comportant successivement, selon la direction parallèle aux premières ondulations, une première, une deuxième et une troisième zones planes" qu'aucune autre zone plane n'est interposée entre la première et la deuxième zones planes et entre la deuxième et la troisième zones planes.

Selon des modes de réalisation, une telle paroi peut comporter une ou plusieurs des caractéristiques suivantes.

Selon un mode de réalisation, la première zone plane et la deuxième zone plane sont séparées l'une de l'autre par une deuxième ondulation qui est disposée en regard, selon la direction d'épaisseur, d'un espace libre séparant le premier et le deuxième plateaux internes, la deuxième et la troisième zones planes étant séparées par une deuxième ondulation qui est disposée en regard, selon la direction d'épaisseur, d'un espace libre séparant le deuxième et le troisième plateau externes.

Selon un mode de réalisation, le premier, le deuxième et le troisième plateaux internes sont respectivement fixés aux premier, deuxième et troisième éléments porteurs par rivetage.

Selon un mode de réalisation, le premier, le deuxième et le troisième plateaux internes sont respectivement en contact contre plus de 70 %, et avantageusement entre 90 et 100 %, de la surface de la première, deuxième et troisième zones planes. Ceci permet de répartir les efforts dus aux pressions hydrostatiques et dynamiques exercées par le gaz liquéfié sur la membrane d'étanchéité primaire sur une plus grande surface de support, contribuant ainsi à une meilleure répartition des contraintes.

Selon un mode de réalisation, la membrane d'étanchéité primaire comporte une pluralité de tôles métalliques ondulées, chaque tôle métallique ondulée présentant des bords qui sont chacun soudés par recouvrement à un bord d'une tôle métallique ondulée adjacente, la première, la deuxième et la troisième zones planes étant formées par deux bords de deux tôles métalliques ondulées adjacentes. En d'autres termes, les premier, deuxième et troisième plateaux internes supportent et ancrent les deux bords adjacents de deux tôles métalliques ondulées adjacentes.

Selon un mode de réalisation, la première, la deuxième et la troisième zones planes sont respectivement soudées par une soudure par point à la première, deuxième et troisième plaques internes.

Selon un mode de réalisation, la barrière thermiquement isolante primaire comporte au moins une deuxième rangée d'éléments porteurs comportant un quatrième, un cinquième et un sixième éléments porteurs qui sont fixés à la barrière thermiquement isolante secondaire et qui s'élèvent selon la direction d'épaisseur de la paroi, le quatrième, le cinquième et le sixième éléments porteurs étant alignés selon une direction parallèle aux premières ondulations et étant respectivement fixés à un quatrième, un cinquième et un sixième plateaux internes, le quatrième, le cinquième et le sixième éléments porteurs étant respectivement alignés selon une direction parallèle au deuxièmes ondulations avec le premier, le deuxième et le troisième éléments porteurs, la pluralité de zones planes comportant une quatrième, une cinquième et une sixième zones planes qui sont respectivement en appui contre le quatrième, le cinquième et le sixième plateaux internes. Ainsi, la barrière thermiquement isolante primaire comporte à la fois des éléments porteurs qui sont alignés parallèlement aux premières ondulations de la membrane d'étanchéité primaire et des éléments porteurs qui sont alignés parallèlement aux deuxièmes ondulations de la membrane d'étanchéité primaire.

Selon un mode de réalisation, la quatrième, la cinquième et la sixième zones planes sont respectivement soudées aux quatrième, cinquième et sixième plateaux internes.

Selon un mode de réalisation, la quatrième, la cinquième et la sixième zones planes sont chacune séparées d'un des bords de la tôle métallique ondulée à laquelle ils appartiennent par au moins une première et une deuxième ondulations. Ainsi, les zones planes de la membrane d'étanchéité primaire sont également soudées aux plateaux internes en-dehors des bords des tôles métalliques ondulées ce qui améliore encore davantage la répartition des contraintes sur les ondulations de la membrane d'étanchéité primaire.

Selon un mode de réalisation, la quatrième, la cinquième et la sixième zones planes sont respectivement soudées par transparence aux quatrième, cinquième et sixièmes plateaux internes.

Selon un mode de réalisation, chaque zone plane de la membrane d'étanchéité primaire est en appui contre un plateau interne respectif, chacun desdits plateaux internes étant fixé à un élément porteur respectif qui est fixé à la barrière thermiquement isolante secondaire et qui s'élève selon la direction d'épaisseur. Ceci permet d'assurer l'homogénéité de la répartition des contraintes sur les ondulations de l'ensemble de la membrane d'étanchéité primaire.

Selon un mode de réalisation, chacun des premier, deuxième et troisième éléments porteurs est respectivement fixé à un premier, un deuxième et un troisième plateaux externes, chacun des premier, deuxième et troisième plateaux externes étant fixé à la barrière thermiquement isolante secondaire et plaquant la membrane d'étanchéité secondaire contre la barrière thermiquement isolante secondaire. Ainsi, les plateaux externes ont une double fonctionnalité. D'une part, ils assurent l'ancrage des éléments porteurs à la barrière thermiquement isolante secondaire et, d'autre part, ils évitent à la membrane d'étanchéité secondaire de s'arracher, notamment lorsque la pression régnant dans la barrière thermiquement isolante secondaire est supérieure à celle régnant dans la barrière thermiquement isolante primaire.

Selon un mode de réalisation, la membrane d'étanchéité secondaire comporte une première série d'ondulations présentant des premières ondulations parallèles les unes aux autres et une deuxième séries d'ondulations présentant des deuxièmes ondulations parallèles les unes aux autres et perpendiculaires aux premières ondulations, la membrane d'étanchéité secondaire comportant une pluralité de zones planes qui sont chacune définies entre deux premières ondulations adjacentes et entre deux deuxième ondulations adjacentes de la membrane d'étanchéité secondaire, le premier, le deuxième et le troisième plateaux externes étant chacun plaqués contre l'une des zones planes de la membrane d'étanchéité secondaire.

Selon un mode de réalisation, le premier, le deuxième et le troisième plateaux externes sont respectivement en contact contre plus de 70 %, et avantageusement entre 90 et 100 %, de la surface de la zone plane correspondante de la membrane d'étanchéité secondaire. Ceci permet de répartir les efforts transitant par les éléments porteurs sur une plus grande surface de la membrane d'étanchéité secondaire, contribuant ainsi à une meilleure répartition des contraintes.

Selon un mode de réalisation, la première série d'ondulations et la deuxième série d'ondulations de la membrane d'étanchéité secondaire sont respectivement en regard, selon la direction d'épaisseur, de la première série d'ondulations et de la deuxième série d'ondulations de la membrane d'étanchéité primaire.

Selon un mode de réalisation, le premier, le deuxième et le troisième plateaux externes sont respectivement fixés aux premier, deuxième et troisième éléments porteurs par rivetage.

Selon un mode de réalisation, chacun des premier, deuxième et troisième plateaux externes est fixé à la barrière thermiquement isolante secondaire au moyen d'un dispositif d'ancrage primaire comportant un goujon qui est fixé à un panneau isolant de la barrière thermiquement isolante secondaire et qui traverse un orifice de la membrane d'étanchéité secondaire et un orifice ménagé dans l'un des premier, deuxième et troisième plateaux externes, le goujon présentant une collerette se développant radialement qui est soudée à la membrane d'étanchéité secondaire tout autour dudit orifice de la membrane d'étanchéité secondaire, le dispositif d'ancrage primaire comportant en outre un écrou qui est vissé sur le goujon et qui maintient ledit premier, deuxième ou troisième plateau externe contre la membrane d'étanchéité secondaire.

Selon un mode de réalisation, le premier, le deuxième et le troisième éléments porteurs comportent chacun une embase externe, une embase interne et un pilier, chacune des embases externe et interne présentant un manchon coopérant par emboîtement avec l'une des extrémités du pilier et une collerette d'appui s'étendant radialement depuis une extrémité du manchon.

Selon un mode de réalisation, chaque extrémité des piliers est emboîtée à l'intérieur de l'un des manchons. Selon une autre variante, chaque manchon est emboîté à l'intérieur de l'une des extrémités de l'un des piliers.

Selon un autre mode de réalisation, le pilier, l'embase externe et l'embase interne sont formés d'un seul tenant.

Selon un mode de réalisation, la collerette d'appui de l'embase interne est en appui et fixée contre l'un des plateaux internes.

Selon un mode de réalisation, la collerette d'appui de l'embase externe est en appui et fixée contre l'un des plateaux externes.

Selon un mode de réalisation, chaque pilier est fixé, par exemple par collage, à l'embase interne et à l'embase externe.

Selon un mode de réalisation, chaque pilier est réalisé dans un matériau composite comportant des fibres et une matrice, ce qui permet d'obtenir une résistance à la compression satisfaisante pour une section conductrice limitée.

Selon un mode de réalisation, les fibres sont choisies parmi les fibres de verre, les fibres de carbone, les fibres aramides, les fibres de lin, les fibres de basalte et les mélanges de celles-ci.

Selon un mode de réalisation, la matrice est choisie parmi le polyéthylène, le polypropylène, le poly(téréphtalate d'éthylène), le polyamide, le polyoxyméthylène, le polyetherimide, le polyacrylate, le polyarylethercétone, le polyetherethercétone, des copolymères de ceux-ci, le polyester, le vinylester, l'époxy et le polyuréthane.

Selon un mode de réalisation préféré, les piliers sont réalisés dans une résine époxy renforcée par des fibres de verre.

Selon un mode de réalisation, chaque pilier présente une section tubulaire.

Selon un mode de réalisation, le pilier est au moins partiellement revêtu avec un revêtement d'isolation radiative qui entoure ledit pilier.

Selon un mode de réalisation, le revêtement d'isolation radiative s'étend au moins depuis une extrémité interne du pilier jusqu'à une couverture d'isolation multicouche radiative s'étendant orthogonalement à la direction d'épaisseur de la paroi.

Selon un mode de réalisation, le revêtement d'isolation radiative est choisi parmi les matériaux désignés par le sigle SLI pour « Single Layer Insulation » en langue anglaise qui comporte par exemple, une feuille en matériau polymère, tel que du Polyimide, ou du polyéthylène, revêtue d'un métal, tel que l'aluminium, les matériaux désignés par le sigle MLI et décrits précédemment et une couche préalablement déposée et comprenant un liant et des particules d'aluminium.

Selon un mode de réalisation, chaque pilier présente un ou plusieurs orifices traversants et débouchant dans un espace interne dudit pilier.

Selon un mode de réalisation, chaque pilier présente un espace interne qui est garni avec une garniture isolante en matériau poreux à cellules ouvertes, par exemple choisie parmi une mousse polymère isolante à cellules ouvertes, telle que de la mousse polyuréthane à cellules ouvertes, la laine de verre, la laine de roche, la mousse de mélamine, l'ouate de polyester, les aérogels de polymère, tels que l'aérogel à base de polyuréthanne, notamment commercialisé sous la marque Slentite ^{®}, et les aérogels de silice.

Selon un mode de réalisation alternatif ou complémentaire, chaque pilier présente un espace interne garni avec une couverture d'isolation multicouche radiative réalisée dans un matériau désigné par le sigle MLI pour « multi-layer insulation » en langue anglaise.

Selon un mode de réalisation, la barrière thermiquement isolante primaire présente une phase gazeuse à une pression absolue inférieure à 1 Pa, avantageusement inférieure à 10⁻¹ Pa, de préférence inférieure à 10⁻² Pa et par exemple de l'ordre de 10⁻³ Pa. Ceci permet d'augmenter les performances d'isolation thermique de la barrière thermiquement isolante primaire.

Selon un mode de réalisation, la phase gazeuse de la barrière thermiquement isolante primaire comporte, lorsque la barrière thermiquement isolante primaire est conditionnée à température ambiante, plus de 50 % en volume et avantageusement plus de 75 % en volume de dioxyde de carbone. Ceci permet d'utiliser le phénomène de cryopompage pour contribuer à diminuer la pression à l'intérieur de la barrière thermiquement isolante primaire, notamment lorsque le gaz liquéfié stocké dans la cuve est de l'hydrogène liquide.

Selon un mode de réalisation, la barrière thermiquement isolante primaire comporte au moins une couverture d'isolation multicouche radiative qui présente des ouvertures au travers desquelles passent le premier, le deuxième et le troisième éléments porteurs et qui s'étend orthogonalement à la direction d'épaisseur de la paroi.

Selon un mode de réalisation, la couverture d'isolation multicouche radiative est réalisée dans un matériau de type MLI.

Selon un mode de réalisation, la couverture d'isolation multicouche radiative comporte un empilement d'une pluralité de feuilles réalisées en métal ou en matériau polymère revêtu d'un métal et séparées les unes des autres par une couche textile.

Selon un mode de réalisation, la couche textile est réalisée avec des fibres polymères, telles que des fibres de polyester, ou des fibres de verre.

Selon un mode de réalisation, le métal ou le revêtement métallique est de l'aluminium ou de l'argent.

Selon un mode de réalisation, le matériau polymère des feuilles est du polyimide ou du poly(téréphtalate d'éthylène).

Selon un mode de réalisation, la couverture d'isolation multicouche radiative est positionnée dans un plan qui est plus proche de la membrane d'étanchéité primaire que de la membrane d'étanchéité secondaire. Ceci permet d'optimiser l'efficacité de la couverture d'isolation multicouche radiative. En effet, la couverture d'isolation multicouche étant positionnée du côté le plus froid du gradient de température, l'émissivité de chacune de ses couches est réduite. En outre, un tel positionnement de la couverture d'isolation multicouche radiative permet d'assurer qu'une majeure partie des éléments exposés à des températures supérieures à celle de la membrane d'étanchéité primaire n'émettent pas de flux radiatif directement sur la membrane d'étanchéité primaire.

Selon un mode de réalisation, la barrière thermiquement isolante primaire comporte plusieurs couvertures d'isolation multicouche radiative qui présentent chacune des ouvertures au travers desquelles passent le premier, le deuxième et le troisième éléments porteurs et qui s'étendent orthogonalement à la direction d'épaisseur de la paroi.

Selon un mode de réalisation, la barrière thermiquement isolante primaire comporte deux couvertures d'isolation multicouche radiative qui sont, de préférence, espacées d'une distance comprise entre 30 et 160 mm.

Selon un mode de réalisation, la barrière thermiquement isolante primaire comporte des éléments isolants présentant une structure poreuse à cellules ouvertes qui sont disposés entre la couverture d'isolation multicouche radiative et la membrane d'étanchéité secondaire. Ceci permet d'augmenter encore davantage les performances d'isolation thermique de la barrière thermiquement isolante primaire. En effet, les éléments isolants permettent de limiter les flux thermiques au travers de la barrière thermiquement isolante primaire, notamment lorsque la pression à l'intérieur de celle-ci est supérieure aux valeurs de pression prescrites. De plus, les éléments isolants permettent de diminuer encore davantage la température de la zone de la barrière thermiquement isolante dans laquelle est positionnée la couverture d'isolation multicouche radiative, ce qui augmente son efficacité. Enfin, les éléments isolants permettent également de limiter les flux thermiques par convection au travers de la barrière thermiquement isolante.

Dans un mode de réalisation dans lequel la barrière thermiquement isolante comporte plusieurs couvertures d'isolation multicouche radiative, les éléments isolants à structure poreuse sont avantageusement disposés entre la couverture d'isolation multicouche radiative le plus externe et la membrane d'étanchéité secondaire.

Selon un mode de réalisation, les éléments isolants sont choisis parmi la laine de verre, la laine de roche, l'ouate de polyester, les mousses polymères à cellules ouvertes, telles que la mousse polyuréthane à cellules ouvertes et les mousses de mélamine.

Selon un mode de réalisation, la membrane d'étanchéité primaire comporte deux couches de tôles métalliques ondulées superposées l'une sur l'autre, des éléments d'entretoise étant interposés entre les deux couches. Ceci améliore la fiabilité de la membrane d'étanchéité primaire.

Selon un mode de réalisation, la membrane d'étanchéité primaire présente un espace additionnel qui est interposé entre les deux couches de la membrane d'étanchéité primaire.

Selon un mode de réalisation, l'espace additionnel est placé en dépression.

Selon un autre mode de réalisation, l'espace additionnel est relié à un dispositif d'inertage comportant un réservoir de gaz inerte, de préférence stockant de l'hélium.

Selon un mode de réalisation, la barrière thermiquement isolante secondaire comporte des panneaux isolants ancrés à la structure porteuse.

Selon un mode de réalisation, chaque panneau isolant comporte une couche de mousse polymère isolante prise en sandwich entre une plaque interne et une plaque externe, par exemple en bois contreplaqué ou réalisées dans une matrice polymère renforcée par des fibres, tels que des fibres de verre.

Selon un mode de réalisation, la plaque interne des panneaux isolants est équipée de platines métalliques destinées à l'ancrage des bords des tôles métalliques ondulées de la membrane d'étanchéité secondaire sur les panneaux isolants.

Selon un mode de réalisation, la membrane d'étanchéité secondaire comporte une première série d'ondulations présentant des premières ondulations parallèles et une deuxième série d'ondulations présentant des deuxièmes ondulations parallèles.

Selon un mode de réalisation, les premières et deuxièmes ondulations de la membrane d'étanchéité secondaire font saillie vers l'extérieur, en direction de la structure porteuse, les panneaux isolants de la barrière thermiquement isolante secondaire présentant une face interne équipée de deux séries de rainures perpendiculaires l'une à l'autre et dans lesquelles sont respectivement logées les premières et deuxièmes ondulations de la membrane d'étanchéité secondaire.

Selon un autre mode de réalisation, les premières et deuxièmes ondulations de la membrane d'étanchéité secondaire font saillie vers l'intérieur, en direction opposée à la structure porteuse.

Selon un mode de réalisation, les panneaux isolants de la barrière thermiquement isolante secondaire présentent des fentes de relaxation débouchant sur une face interne desdits panneaux isolants et disposées chacune en regard de l'une des premières ou deuxièmes ondulations de la membrane d'étanchéité secondaire.

Selon un mode de réalisation, l'invention concerne également une cuve étanche et thermiquement isolante comportant une pluralité de parois du type précité.

Dans un mode de réalisation, le gaz liquéfié est de l'hydrogène liquide.

La cuve peut être réalisée selon différentes techniques, notamment sous la forme d'une cuve intégrée à membranes.

Une telle cuve peut faire partie d'une installation de stockage terrestre ou être installée dans une structure flottante, côtière ou en eau profonde, notamment un navire de transport d'hydrogène liquide, c'est-à-dire un hydrogénier, une unité flottante de stockage et de regazéification (FSRU), une unité flottante de production et de stockage déporté (FPSO) et autres. Une telle cuve peut aussi servir de réservoir de carburant dans tout type de navire.

Selon un mode de réalisation, un navire pour le transport d'un gaz liquéfié comporte une double coque et une cuve précitée disposée dans la double coque.

Selon un mode de réalisation, l'invention fournit aussi un système de transfert pour un gaz liquéfié, le système comportant le navire précité et des canalisations isolées agencées de manière à relier la cuve installée dans la coque du navire à une installation de stockage flottante ou terrestre.

Selon un mode de réalisation, le système de transfert comporte également une pompe pour entrainer un flux de gaz liquéfié à travers les canalisations isolées depuis ou vers l'installation de stockage flottante ou terrestre vers ou depuis la cuve du navire.

Selon un mode de réalisation, l'invention fournit aussi un procédé de chargement ou déchargement d'un tel navire, dans lequel on achemine un gaz liquéfié à travers des canalisations isolées depuis ou vers une installation de stockage flottante ou terrestre vers ou depuis la cuve du navire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La [fig.1] est une vue en perspective écorchée et schématique d'une structure porteuse destinée à supporter une cuve étanche et thermiquement isolante de stockage d'un gaz liquéfié.
[fig.2] La [fig.2] est une vue partielle en perspective d'une paroi d'une cuve étanche et thermiquement isolante selon un premier mode de réalisation.
[fig.3] La [fig.3] est une vue en perspective représentant la barrière thermiquement isolante secondaire de la paroi de la [fig.2].
[fig.4] La [fig.4] est une vue en perspective représentant la barrière thermiquement isolante secondaire et la membrane d'étanchéité secondaire de la paroi de la [fig.2].
[fig.5] La [fig.5] est une vue partielle en coupe de la barrière thermiquement isolante secondaire de la paroi de la [fig.2], illustrant partiellement un dispositif d'ancrage destiné à assurer la fixation d'un élément porteur de la barrière thermiquement isolante primaire sur la barrière thermiquement isolante secondaire.
[fig.6] La [fig.6] est une vue écorchée illustrant la barrière thermiquement isolante secondaire, la membrane d'étanchéité secondaire ainsi que des éléments porteurs de la barrière thermiquement isolante primaire de la paroi de la [fig.2].
[fig.7] La [fig.7] est une vue partielle, en perspective, de la paroi de la [fig.2] illustrant la barrière thermiquement isolante secondaire, la membrane d'étanchéité secondaire ainsi que les éléments porteurs de la barrière thermiquement isolante primaire.
[fig.8] La [fig.8] est une vue partielle, en perspective, de la paroi de la [fig.2] illustrant la barrière thermiquement isolante secondaire, la membrane d'étanchéité secondaire, les éléments porteurs de la barrière thermiquement isolante primaire ainsi que la couverture d'isolation multicouche radiative.
[fig.9] La [fig.9] est une vue partielle, en perspective, analogue à celle de la [fig.8] et dans laquelle des plateaux internes destinés à supporter la membrane d'étanchéité primaire sont également représentés.
[fig.10] La [fig.10] est une vue, en coupe, d'une paroi d'une cuve étanche et thermiquement isolante selon un deuxième mode de réalisation.
[fig.11] La [fig.11] est une vue, en coupe, d'une paroi d'une cuve étanche et thermiquement isolante selon un troisième mode de réalisation.
[fig.12] La [fig.12] est une vue partielle, en coupe, d'une paroi d'une cuve étanche et thermiquement isolante selon un quatrième mode de réalisation.
[fig.13] La [fig.13] est une vue partielle en coupe d'une paroi d'une cuve étanche et thermiquement isolante selon une autre variante de réalisation.
[fig.14] La [fig.14] est une représentation schématique écorchée d'une cuve d'un navire et d'un terminal de chargement/déchargement de cette cuve.
[fig.15] La [fig.15] est une vue partielle en coupe d'une paroi d'une cuve étanche et thermiquement isolante selon une autre variante de réalisation.
[fig.16] La [fig.16] est une vue partielle en coupe d'une paroi d'une cuve étanche et thermiquement isolante selon une autre variante de réalisation.
[fig.17] La [fig.17] est une vue partielle en coupe d'une paroi d'une cuve étanche et thermiquement isolante selon une autre variante de réalisation.

### Description des modes de réalisation

Par convention, les termes «externe » et « interne » sont utilisés pour définir la position relative d'un élément par rapport à un autre, par référence à l'intérieur et à l'extérieur de la cuve.

Le gaz liquéfié destiné à être stocké dans la cuve peut notamment être de l'hydrogène liquide qui présente la particularité d'être stocké à environ -253°C à pression atmosphérique.

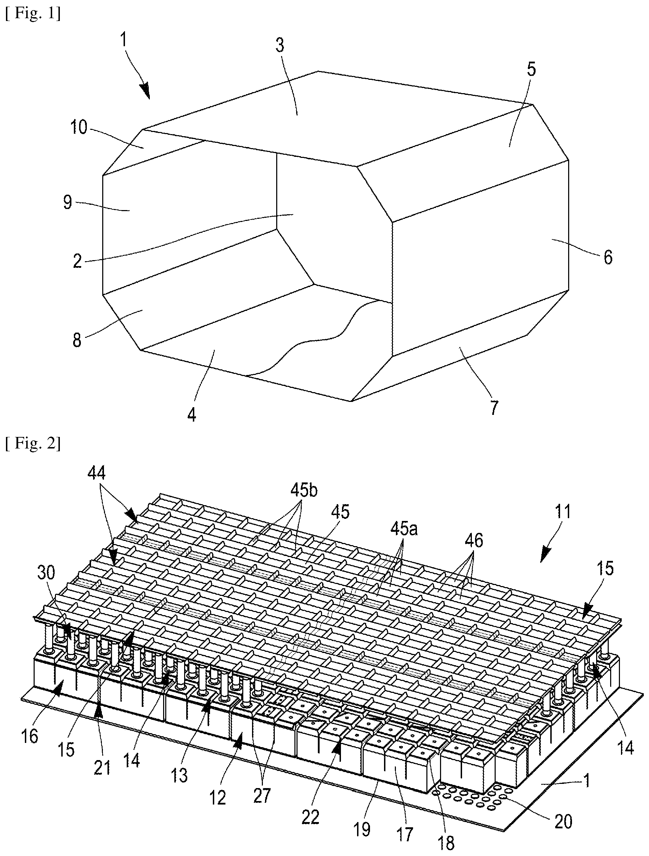

La [fig.1] illustre une structure porteuse 1 contre laquelle une cuve étanche et thermiquement isolante de stockage d'un gaz liquéfié est destinée à être fixée.

La structure porteuse 1 peut notamment être formée de tôles métalliques autoporteuses ou, plus généralement, de tout type de cloison rigide présentant des propriétés mécaniques appropriées. La structure porteuse 1 est, par exemple, formée par la double coque d'un navire. Sur la [fig.1], la structure porteuse 1 présente une forme générale polyédrique. Elle présente deux parois porteuses avant et arrière 2, ici de forme octogonale, dont seule la paroi porteuse arrière 2 est représentée. Les parois avant et arrière 2 sont, par exemple, des parois de cofferdam du navire qui s'étendent transversalement à la direction longitudinale du navire. La structure porteuse 1 comporte également une paroi porteuse supérieure 3, une paroi porteuse inférieure 4 et des parois porteuses latérales 5, 6, 7, 8, 9, 10.

En relation avec les figures 2 à 9, on décrit ci-dessous une paroi 11 d'une cuve étanche et thermiquement isolante selon un premier mode de réalisation. La paroi 11 présente une structure multicouche comportant, selon la direction d'épaisseur de la paroi 11, depuis l'extérieur vers l'intérieur, une barrière thermiquement isolante secondaire 12, une membrane d'étanchéité secondaire 13, une barrière thermiquement isolante primaire 14 et une membrane d'étanchéité primaire 15 destinée à être en contact avec le gaz liquéfié contenu dans la cuve.

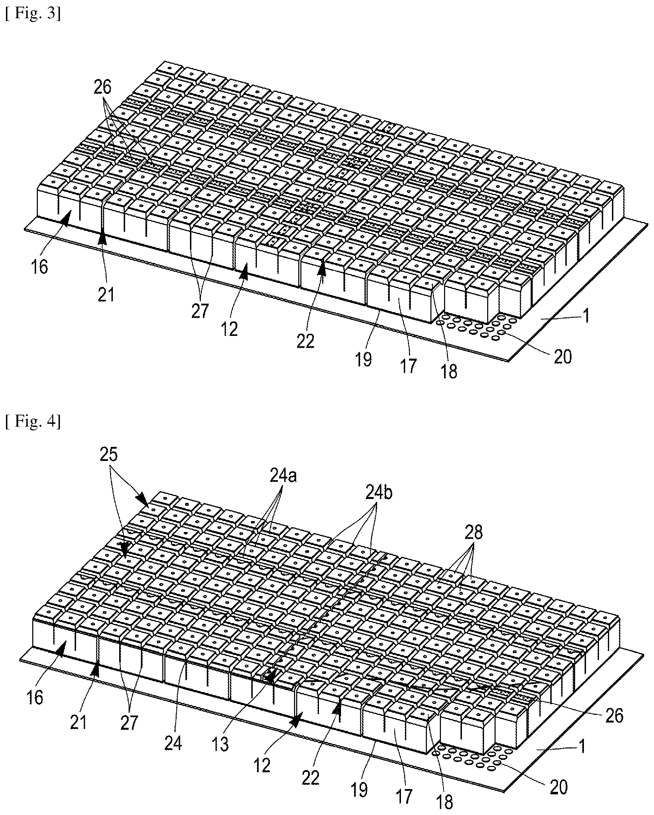

La barrière thermiquement isolante secondaire 12 est représentée sur la [fig.3]. Elle comporte une pluralité de panneaux isolants 16 ancrés à la structure porteuse 1. Les panneaux isolants 16 comportent chacun une couche de mousse polymère isolante 17 prise en sandwich entre une plaque interne 18 et une plaque externe 19. Les plaques interne 18 et externe 19 sont, par exemple, des plaques de bois contreplaqué collées sur ladite couche de mousse polymère isolante 17. Selon une variante, les plaques interne 18 et externe 19 sont réalisées dans une matrice polymère renforcée par des fibres, tels que des fibres de verre. La mousse polymère isolante peut notamment être une mousse à base de polyuréthanne. La mousse polymère est, avantageusement, renforcée par des fibres, telle que des fibres de verre, contribuant à réduire sa contraction thermique.

Les panneaux isolants 16 sont ancrés à la structure porteuse 1 au moyen de dispositifs d'ancrage secondaire, non représentés. Chaque panneau isolant 16 est, par exemple, fixé à au moins chacun de ses quatre coins. Chaque dispositif d'ancrage secondaire comporte un goujon soudé à la structure porteuse 1 ainsi qu'un organe d'appui qui est fixé sur le goujon et qui est en appui contre une zone d'appui des panneaux isolants 16. Selon un mode de réalisation, la plaque externe 19 des panneaux isolants 16 déborde par rapport à la couche de mousse polymère isolante 17, au moins au niveau des coins du panneau isolant 16, de manière à former les zones d'appui des panneaux isolants 16 coopérant avec les organes d'appui des dispositifs d'ancrage secondaires. Des organes élastiques, tels que des rondelles Belleville, sont avantageusement enfilées sur le goujon, entre un écrou monté sur le goujon et l'organe d'appui, ce qui permet d'assurer un ancrage élastique des panneaux isolants 16 sur la structure porteuse 1.

De manière avantageuse, des portions de mastic 20 sont interposés entre la plaque externe 19 des panneaux isolants 16 et la structure porteuse 1. Les portions de mastic 20 contribuent ainsi à compenser les irrégularités de surface de la structure porteuse 1. Selon une variante de réalisation avantageuse, les portions de mastic 20 adhérent à la plaque externe 19 des panneaux isolants 16 et à la structure porteuse 1. Les portions de mastic 20 participent ainsi à l'ancrage des panneaux isolants 16 sur la structure porteuse 1. Dans une telle variante de réalisation, les dispositifs d'ancrage secondaires sont optionnels.

Les panneaux isolants 16 présentent sensiblement une forme de parallélépipède rectangle et sont juxtaposés selon des rangées parallèles et séparés les uns des autres par des interstices 21 garantissant un jeu fonctionnel de montage. Les interstices 21 sont comblés avec une garniture calorifuge, non représentée, telle que de la laine de verre, de la laine de roche ou de la mousse polymère souple à cellules ouvertes, par exemple. Les interstices peuvent également être comblés avec des bouchons isolants, tels que décrits dans les demandes WO2019155157 ou WO2021028624, par exemple.

Dans le mode de réalisation représenté, la face interne des panneaux isolants 16 présente deux séries de rainures 22 perpendiculaires l'une à l'autre et destinées à la réception d'ondulations 24, faisant saillie vers l'extérieur de la cuve, formées sur les tôles métalliques ondulées 25 de la membrane d'étanchéité secondaire 13. Chacune des séries de rainures 22 est parallèle à deux côtés opposés des panneaux isolants 16. Dans le mode de réalisation représenté, les rainures 22 traversent intégralement l'épaisseur de la plaque interne 10 ainsi qu'une portion interne de la couche de mousse polymère isolante 17. De manière avantageuse, les rainures 22 présentent une forme complémentaire à celles des ondulations 24 de la membrane d'étanchéité secondaire 13.

Par ailleurs, la plaque interne 18 des panneaux isolants 16 est équipée de platines métalliques 26 destinées à l'ancrage des bords des tôles métalliques ondulées 25 de la membrane d'étanchéité secondaire 13 sur les panneaux isolants 16. Les platines métalliques 26 s'étendent selon deux directions perpendiculaires qui sont chacune parallèles à deux côtés opposés des panneaux isolants 16. Les platines métalliques 26 sont fixées sur la plaque interne 18 des panneaux isolants 16, par des vis, des rivets ou des agrafes, par exemple. Les platines métalliques 26 sont mises en place dans des évidements ménagés dans la plaque interne 18 de telle sorte que la surface interne des platines métalliques 26 affleure la surface interne de la plaque interne 18.

Par ailleurs, les panneaux isolants 16 présentent des fentes de relaxation 27 qui permettent de diminuer leur raideur de sorte que la barrière thermiquement isolante secondaire 12 se déforme de la manière la plus homogène possible. Ceci permet d'obtenir des déformations les plus uniformes possibles des ondulations 24 de la membrane d'étanchéité secondaire 13. De manière avantageuse, les panneaux isolants 16 présentent des fentes de relaxation 27 au moins en regard de chacune des ondulations 24 de la membrane d'étanchéité secondaire 13. Ainsi, comme illustré par exemple sur la [fig.3], une fente de relaxation 27 s'étend à partir du fond de chacune des rainures 22 en direction de la plaque externe 19 des panneaux isolants 16. Selon une variante optionnelle, les blocs isolants 16 comportent également des fentes de relaxation qui débouchent sur la face externe des panneaux isolants 16. De telles fentes de relaxation ne sont alors pas disposées en regard d'une ondulation 24 de la membrane d'étanchéité secondaire 13 mais à mi-distance entre deux ondulations 24 parallèles.

Par ailleurs, comme représenté sur la [fig.4], la membrane d'étanchéité secondaire 13 comporte une pluralité de tôles métalliques ondulées 25 ayant chacune une forme sensiblement rectangulaire. Les tôles métalliques ondulées 25 sont, par exemple, réalisées en Invar^{®} : c'est-à-dire un alliage de fer et de nickel dont le coefficient de dilatation est typiquement compris entre 1,2.10⁻⁶ et 2.10⁻⁶ K⁻¹, ou dans un alliage de fer à forte teneur en manganèse dont le coefficient de dilatation est typiquement de l'ordre de 7.10⁻⁶ K⁻¹. De manière alternative, les tôles métalliques ondulées 25 peuvent également être réalisées en acier inoxydable ou en aluminium.

Les tôles métalliques ondulées 25 sont soudées à recouvrement le long de leurs bords afin d'assurer l'étanchéité de la membrane d'étanchéité secondaire 13. Par ailleurs, les tôles métalliques ondulées 25 sont disposées de manière décalée par rapport aux panneaux isolants 16 de la barrière thermiquement isolante secondaire 12 de telle sorte que chacune desdites tôles métalliques ondulées 25 s'étende conjointement sur plusieurs panneaux isolants 16 adjacents. Afin d'assurer l'ancrage de la membrane d'étanchéité secondaires 13 sur la barrière thermiquement isolante secondaire 12, les bords des tôles métalliques ondulées 25 sont soudés sur les platines métalliques 26, par exemple par des soudures par point.

La membrane d'étanchéité secondaire 13 présente des ondulations 24 et plus particulièrement une première série d'ondulations 24a s'étendant parallèlement à une première direction et une seconde série d'ondulations 24b s'étendant parallèlement à une seconde direction. Les directions des séries d'ondulations 24a, 24b sont perpendiculaires les unes aux autres. Chacune des séries d'ondulations 24a, 24b est parallèle à deux bords opposés de la tôle métallique ondulée 25. Les ondulations 24 font ici saillie vers l'extérieur de la cuve, c'est-à-dire en direction de la structure porteuse 1. La membrane d'étanchéité secondaire 13 comporte entre les ondulations 24, une pluralité de zones planes 28.

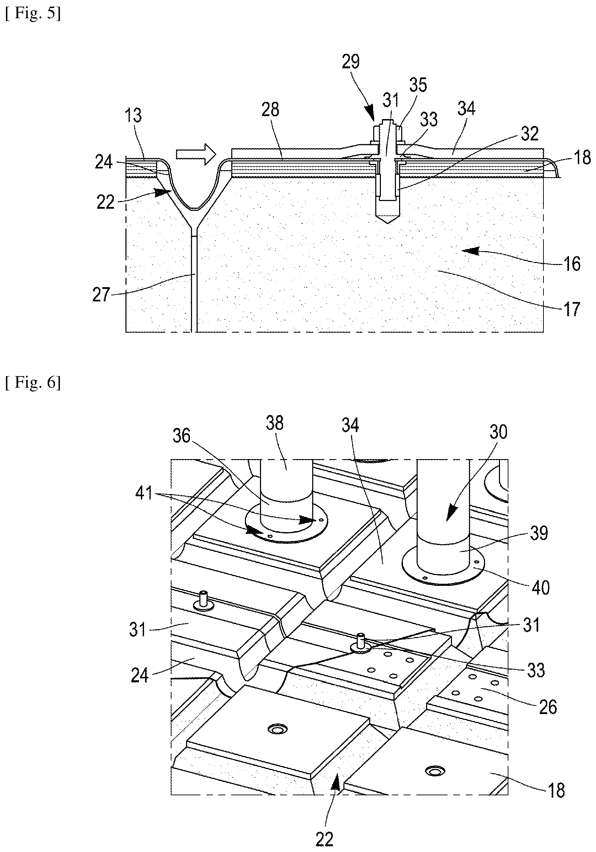

Comme représenté sur les figures 4 et 5, les ondulations 24 des tôles métalliques ondulées 25 sont logées dans les rainures 22 ménagées dans la face interne des panneaux isolants 16 et dans les interstices 21 ménagés entre les panneaux isolants 16 adjacents.

Par ailleurs, les zones planes 28 de la membrane d'étanchéité secondaire 13 sont chacune traversées par un dispositif d'ancrage primaire 29, illustré de manière détaillée sur la [fig.5], et visant à assurer l'ancrage des éléments porteurs 30 de la barrière thermiquement isolante primaire 14 sur les panneaux isolants 16 de la barrière thermiquement isolante secondaire 12. Chaque dispositif d'ancrage primaire 29 comporte un goujon 31 qui traverse la membrane d'étanchéité secondaire 13. Le goujon 31 présente une extrémité externe qui est fixée à l'un des panneaux isolants 16. Pour ce faire, dans le mode de réalisation représenté, l'extrémité externe de chaque goujon 31 est filetée et est vissée dans une douille filetée 32 qui est fixée à l'intérieur d'un alésage ménagé dans la plaque interne 18 de l'un des panneaux isolants 16. Par ailleurs, le goujon 31 comporte une collerette 33 se développant radialement par rapport à l'axe du goujon 31.

La collerette 33 est soudée de manière étanche sur la membrane d'étanchéité secondaire 13 autour de l'orifice de ladite membrane d'étanchéité secondaire 13 traversé par le goujon 31 afin de conserver le caractère étanche de la membrane d'étanchéité secondaire 13.

Par ailleurs, un plateau externe 34, également illustré sur la [fig.5], présente un orifice traversé par le goujon 31. Le dispositif d'ancrage primaire 29 comporte un écrou 35 qui est vissé sur une extrémité interne filetée du goujon 31 et qui permet ainsi de maintenir le plateau externe 34 contre la zone plane 28 en regard de la membrane d'étanchéité secondaire 13. Les plateaux externes 34 ont une double fonctionnalité. D'une part, ils permettent de plaquer la membrane d'étanchéité secondaire 13 contre les panneaux isolants 16 de la barrière thermiquement isolante secondaire 12, afin d'éviter qu'elle ne s'arrache en raison d'une surpression de la barrière thermiquement isolante secondaire 12 par rapport à la barrière thermiquement isolante primaire 14. D'autre part, ils permettent la fixation des éléments porteurs 30 de la barrière thermiquement isolante primaire 14 qui seront décrits de manière détaillée ci-dessous.

Les plateaux externes 34 sont avantageusement en contact contre la zone plane 28 correspondante sur plus de 70% de la surface de ladite zone plane 28 et avantageusement entre 90 et 100 % de sa surface.

Les plateaux externes 34 sont, par exemple, réalisés en métal, tel que l'acier inoxydable mais peuvent également être réalisés dans un matériau composite, tel qu'une résine époxy chargée de fibres de verre, par exemple.

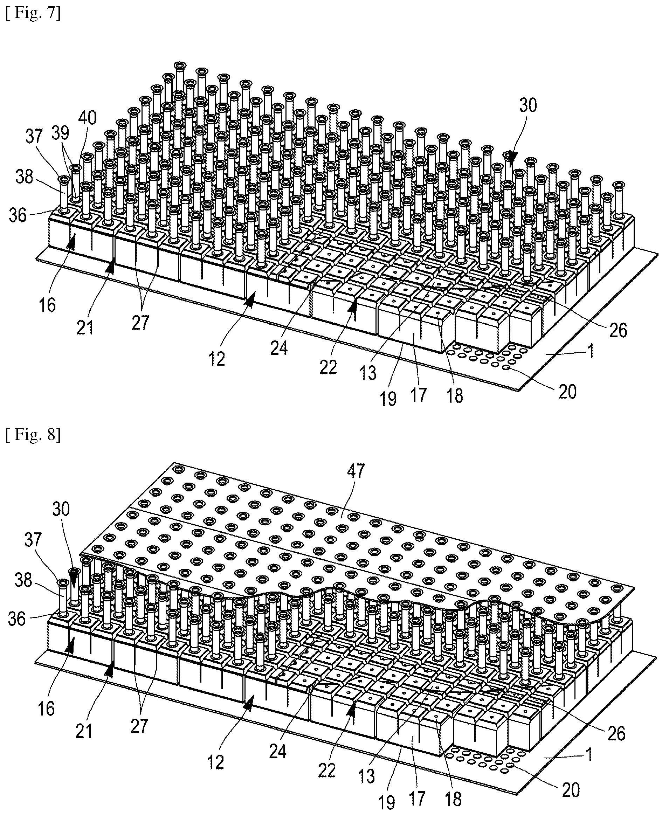

Comme représenté sur la [fig.7], la barrière thermiquement isolante primaire 14 comporte une pluralité d'éléments porteurs 30 qui s'étendent selon la direction d'épaisseur de la paroi 11. Les éléments porteurs 30 permettent de supporter la membrane d'étanchéité primaire 15 et, par conséquent, de reprendre les efforts dus aux pressions hydrostatiques et dynamiques exercées, sur la membrane d'étanchéité primaire 15, par le gaz liquéfié contenu à l'intérieur de la cuve. Les éléments porteurs 30 sont alignés selon des rangées qui sont parallèles à la direction des ondulations de la première série d'ondulations 24a et selon des rangées parallèles à la direction des ondulations de la deuxième série d'ondulations 24b.

Les éléments porteurs 30 comportent chacun une embase externe 36, une embase interne 37 et un pilier 38 s'étendant entre l'embase externe 36 et l'embase interne 37. L'embase externe 36 et l'embase interne 37 présentent chacun un manchon 39 dans lequel est reçu par emboîtement l'une des extrémités du pilier 38 et une collerette d'appui 40 qui s'étend radialement depuis une extrémité du manchon 39. Dans une variante alternative, ce sont les manchons 39 de l'embase externe 36 et de l'embase interne 37 qui sont reçues par emboîtement à l'intérieur des piliers 38.

L'embase externe 36 et l'embase interne 37 peuvent être réalisées en métal, tel que l'acier inoxydable, ou dans un matériau composite, tel qu'une résine époxy chargée de fibres de verre, par exemple. L'embase externe 36 et l'embase interne 37 sont susceptibles d'être fixées au pilier 38 par tout moyen et notamment par collage.

Selon une autre variante de réalisation, le pilier 38 ainsi que l'embase externe 36 et l'embase interne 37 sont formés d'un seul tenant, par moulage par exemple.

Les piliers 38 présentent une forme tubulaire, de préférence avec une section circulaire. Selon une réalisation avantageuse, les piliers 38 sont réalisés dans un matériau composite comportant des fibres et une matrice. De tels piliers 38 permettent d'obtenir une résistance à la compression satisfaisante pour une section conductrice limitée, ce qui limite la conduction de chaleur de l'extérieur vers l'intérieur de la cuve au travers des piliers 38. Les fibres sont, par exemple, choisies parmi les fibres de verre, les fibres de carbone, les fibres aramides, les fibres de lin, les fibres de basalte et les mélanges de celles-ci. La matrice est par exemple choisie parmi le polyéthylène, le polypropylène, le poly(téréphtalate d'éthylène), le polyamide, le polyoxyméthylène, le polyetherimide, le polyacrylate, le polyarylethercétone, le polyetherethercétone, les copolymères de ceux-ci, le polyester, le vinylester, l'époxy et le polyuréthane. Selon un mode de réalisation particulier, les piliers 38 sont réalisés dans une résine époxy renforcée par des fibres de verre.

Les piliers 38 sont avantageusement pourvus d'orifices traversants, non illustrés, qui facilitent la mise en dépression de leur espace interne lorsque la barrière thermiquement isolante primaire 14 est mise en dépression, tel que décrit ci-dessous. De plus, l'espace interne des piliers 38 est, avantageusement, garni avec une garniture isolante perméable au gaz et plus particulièrement réalisée dans un matériau poreux à cellules ouvertes. La garniture isolante est, par exemple, une mousse polymère isolante à cellules ouvertes, telle que de la mousse polyuréthane à cellules ouvertes, de la laine de verre, de la laine de roche, de la mousse de mélamine, de l'ouate de polyester, des aérogels de polymère, tel que l'aérogel à base de polyuréthanne, notamment commercialisé sous la marque Slentite ^{®}, ou des aérogels de silice.

De manière alternative ou complémentaire, l'espace interne peut également comporter une couverture d'isolation multicouche radiative réalisée dans un matériau désigné par le sigle MLI pour « multi-layer insulation » en langue anglaise, qui sera décrit par la suite, visant à réduire les pertes de chaleur par rayonnement thermique.

Les collerettes d'appui 40 des embases externes 36 sont chacune fixées sur l'un des plateaux externes 34. Comme illustré sur la [fig.6], chaque collerette d'appui 40 des embases externes 36 est, par exemple, fixée sur le plateau externe 34 au moyen de rivets 41 répartis autour de l'axe de l'élément porteur 30.

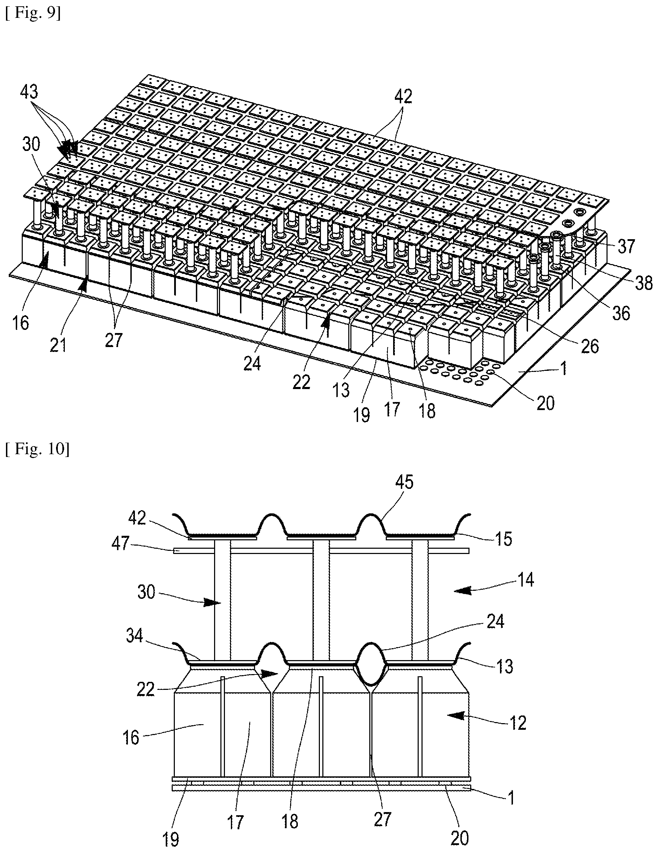

Par ailleurs, comme illustré sur la [fig.9], les collerettes d'appui 40 des embases internes 37 sont chacune en appui et fixées contre un plateau interne 42. Les plateaux internes 42 sont, par exemple, réalisés dans un métal, tel que l'acier inoxydable. Les collerettes d'appui 40 des embases internes 37 sont, par exemple, fixées sur la plateau interne 42 au moyen de rivets 43 répartis autour de l'axe de l'élément porteur 30.

Les éléments porteurs 30 forment ainsi des structures de supports discrètes qui ne sont pas reliées rigidement les unes aux autres et qui supportent chacune une zone plane 46 de la membrane d'étanchéité primaire 15, ce qui permet une bonne répartition des contraintes entre les ondulations 45 de la membrane d'étanchéité primaire 15.

En revenant à la [fig.2], on observe la membrane d'étanchéité primaire 15 qui est également obtenue par assemblage d'une pluralité de tôles métalliques ondulées 44. Les tôles métalliques ondulées 44 ont chacune une forme sensiblement rectangulaire. Les tôles métalliques ondulées 44 sont, par exemple, réalisées en Invar^{®} : c'est-à-dire un alliage de fer et de nickel dont le coefficient de dilatation est typiquement compris entre 1,2.10⁻⁶ et 2.10⁻⁶ K⁻¹, ou dans un alliage de fer à forte teneur en manganèse dont le coefficient de dilatation est typiquement de l'ordre de 7.10⁻⁶ K⁻¹. De manière alternative, les tôles métalliques ondulées 44 peuvent également être réalisées en acier inoxydable ou en aluminium.

Les tôles métalliques ondulées 44 sont soudées à recouvrement le long de leurs bords afin d'assurer l'étanchéité de la membrane d'étanchéité primaire 15. La membrane d'étanchéité primaire 15 comporte des ondulations 45. Plus particulièrement, elle comporte une première série d'ondulations 45a s'étendant parallèlement à une première direction et une seconde série d'ondulations 45b s'étendant parallèlement à une seconde direction. Les directions des séries d'ondulations 45a, 45b sont perpendiculaires et sont parallèles ou perpendiculaires aux rangées d'élément porteurs 30. Chacune des séries d'ondulations 45a, 45b est parallèle à deux bords opposés des tôles métalliques ondulées 44. Les ondulations 45 font saillie vers l'intérieur de la cuve, c'est-à-dire en direction opposée à la structure porteuse 1. Chaque tôle métallique ondulée 44 comporte entre les ondulations 45, une pluralité de zones planes 46.

Le pas des ondulations 24 de la membrane d'étanchéité secondaire 13 est égal au pas des ondulations 45 de la membrane d'étanchéité primaire 15 ou à un multiple entier de celui-ci. En outre, chacune des ondulations 24 de la membrane d'étanchéité secondaire 13 est disposée en regard selon la direction d'épaisseur de la paroi 11 d'une ondulation 45 de la membrane d'étanchéité primaire 15. Ainsi, chaque zone plane 46 de la membrane d'étanchéité primaire 15 se situe en regard, selon la direction d'épaisseur de la paroi 11, d'une zone plane 28 de la membrane d'étanchéité secondaire 13. Dès lors, l'axe de chaque élément porteur 30 passe à la fois par le centre d'une zone plane 46 de la membrane d'étanchéité primaire 15 et par le centre d'une zone plane 28 de la membrane d'étanchéité secondaire 13.

De manière avantageuse, les plateaux internes 42 sont chacun en contact contre la zone plane 46 correspondante de la membrane d'étanchéité primaire 15 sur plus de 70% de la surface de ladite zone plane 46 et avantageusement entre 90 et 100 % de sa surface.

Les tôles métalliques ondulées 44 de la membrane d'étanchéité primaire 15 sont au moins ancrées, par soudage, le long de leurs bords sur les plateaux internes 42. Pour ce faire, les bords des tôles métalliques ondulées 44 sont soudés sur les plateaux internes 42, par exemple par des soudures par point. Selon un mode de réalisation avantageux, les tôles métalliques ondulées 44 sont également ancrées à des plateaux internes 42 en dehors de leurs zones de bord. Pour ce faire, les tôles métalliques ondulées 44 peuvent notamment être soudées sur les plateaux internes 42 par des soudures par transparence. Selon un mode de réalisation avantageux, les tôles métalliques ondulées 44 sont soudées à chacun des plateaux internes 42 qui les supportent. Un tel mode de réalisation est particulièrement avantageux en ce qu'il permet de répartir encore plus uniformément les contraintes entre les ondulations 45 de la membrane d'étanchéité primaire 15.

Par ailleurs, la barrière thermiquement isolante primaire 14 présente une phase gazeuse qui est en dépression, c'est-à-dire présente une pression absolue inférieure à la pression atmosphérique, afin de conférer à la barrière thermiquement isolante primaire 14 les propriétés thermiquement isolantes requises. La phase gazeuse de la barrière thermiquement isolante primaire 14 est, avantageusement, placée à une pression absolue inférieure à 1 Pa, avantageusement inférieure à 10⁻¹ Pa, de préférence inférieure à 10⁻² Pa et par exemple de l'ordre de 10⁻³ Pa. Pour ce faire, la barrière thermiquement isolante primaire 14 est avantageusement reliée à une pompe à vide.

Selon un mode de réalisation avantageux, un phénomène de cryopompage est utilisé, en tant qu'alternative ou complément à la pompe à vide précitée, pour obtenir le niveau de dépression cible dans la barrière thermiquement isolante primaire 14. Aussi, préalablement à sa mise en dépression, la barrière thermiquement isolante primaire 14 est chargée avec un gaz inerte ayant une température de condensation solide supérieure à la température de liquéfaction du gaz liquéfié stocké dans la cuve. A titre d'exemple, lorsque le gaz liquéfié stocké dans la cuve est de l'hydrogène liquide, le gaz inerte peut être du dioxyde de carbone. Ainsi, compte-tenu de la température de l'hydrogène à l'état liquide, le dioxyde de carbone contenu dans la barrière thermiquement isolante primaire 14 se condense à l'état solide dans la barrière thermiquement isolante primaire 14, ce qui contribue à diminuer la pression dans celle-ci.

En plus d'être mise en dépression, la barrière thermiquement isolante primaire 14 comporte des matériaux isolants permettant d'augmenter encore davantage ses propriétés d'isolation. Aussi, comme représenté sur la [fig.8], la barrière thermiquement isolante primaire 14 comporte une couverture d'isolation multicouche radiative 47 qui permet de réduire les transferts de chaleur par rayonnement thermique. La couverture d'isolation multicouche radiative 47 est typiquement réalisée dans un matériau désigné par le sigle MLI pour « multi-layer insulation » en langue anglaise. Ainsi, la couverture d'isolation multicouche radiative 47 présente un empilement d'une pluralité de feuilles réalisées soit en métal, tel que de l'aluminium ou de l'argent par exemple, soit dans un matériau polymère revêtu de métal, lesdites feuilles étant séparées les unes des autres par une couche textile tissé ou intissé réalisée avec des fibres polymères, telles que des fibres de polyester, ou des fibres de verre. Les feuilles en matériau plastique sont, par exemple, réalisées en Polyimide, notamment commercialisé sous la marque Kapton ^{®}, ou en poly(téréphtalate d'éthylène), notamment commercialisé sous la marque Mylar ^{®}. Ces feuilles minces sont revêtues, de chaque côté, par un métal, tel que l'aluminium ou l'argent.

Comme illustré sur la [fig.8], la couverture d'isolation multicouche radiative 47 présente des ouvertures au travers desquelles passent les piliers 38 des éléments porteurs 30. De manière avantageuse, la couverture d'isolation multicouche radiative 47 est positionnée dans la partie la plus froide de la barrière thermiquement isolante primaire 14. En d'autres termes, la couverture d'isolation multicouche radiative 47 est positionnée dans un plan qui est parallèle aux membranes d'étanchéité secondaire 13 et primaire 15 mais est plus proche de la membrane d'étanchéité primaire 15 que de la membrane d'étanchéité secondaire 13. Ceci permet d'augmenter l'efficacité de la couverture d'isolation multicouche radiative 47 dans la mesure où elle est ainsi positionnée dans la zone la plus froide de la barrière thermiquement isolante primaire 14 de sorte que l'émissivité de chacune de ses couches est réduite.

La couverture d'isolation multicouche radiative 47 est ici fixée aux piliers 38 des éléments porteurs 30, par exemple par collage ou au moyen de paires de bande de fixation du type velours-crochet dont l'une des bandes est associée à la couverture d'isolation multicouche radiative 47, par exemple par couture ou collage, et dont l'autre bande est collée à l'un des piliers 38.

La [fig.10] illustre une paroi d'une cuve étanche et thermiquement isolante selon un deuxième mode de réalisation. Ce mode de réalisation diffère de celui décrit ci-dessus en relation avec les figures 2 à 9 en ce que les ondulations 24 de la membrane d'étanchéité secondaire 13 ne font pas saillie vers l'extérieur, c'est-à-dire vers la structure porteuse 1, mais vers l'intérieur, c'est-à-dire dans une direction opposée à la structure porteuse 1.

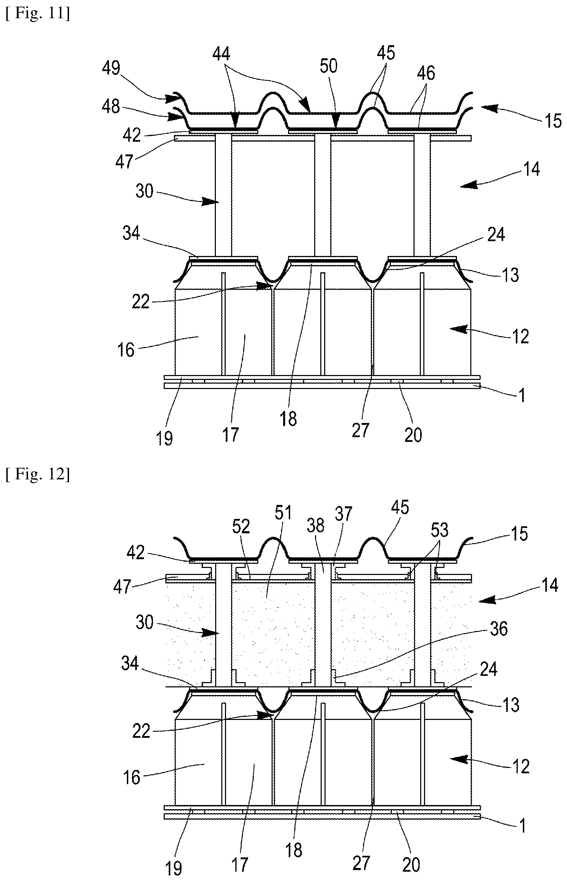

La [fig.11] illustre une paroi d'une cuve étanche et thermiquement isolante selon un troisième mode de réalisation. Ce mode de réalisation diffère de celui décrit ci-dessus en relation avec les figures 2 à 9 en ce que la membrane d'étanchéité primaire 15 présente deux couches 48, 49 de tôles métalliques ondulées 44 superposées l'une sur l'autre. Ceci assure une redondance de la fonction d'étanchéité et améliore ainsi la fiabilité de la membrane d'étanchéité primaire 15.

Les deux couches 48, 49 de tôles métalliques ondulées 44 présentent chacune une structure analogue à celle de la membrane d'étanchéité primaire 15 décrite ci-dessus en relation avec la [fig.2]. Les ondulations 45 des deux couches 48, 49 sont disposées selon des pas identiques et sont disposées en regard les unes des autres selon la direction d'épaisseur de la paroi 11.

Par ailleurs, des éléments d'entretoise, non représentés, ayant une épaisseur prédéterminée sont interposés entre les deux couches 48, 49 de manière que la distance entre celles-ci soit maintenue sensiblement constante. De tels éléments d'entretoise sont, par exemple, positionnés dans les zones planes 46 des tôles métalliques ondulées 44. Les éléments d'entretoise sont, par exemple, chacun fixés à un plateau interne 42, par un dispositif d'ancrage, non représenté, traversant la couche 48. En outre, les bords des tôles métalliques ondulées 44 de la couche 49 sont ancrés, par exemple par soudure, sur des platines d'ancrage, également non représentés, fixées aux éléments d'entretoise ou formées par ceux-ci. Selon un mode de réalisation, les éléments d'entretoise sont réalisés dans des matériaux thermiquement conducteurs, tel que du métal et notamment de l'acier inoxydable. Ceci permet de limiter la différence de température entre les deux couches 48, 49 de la membrane d'étanchéité primaire 15 et par conséquent, de limiter les effets de cette double couche, sur la cinétique du phénomène de cryopompage à l'intérieur de la barrière thermiquement isolante primaire 14.

Selon un mode de réalisation, la phase gazeuse de l'espace additionnel 50 qui est interposé entre les deux couches 48, 49 de la membrane d'étanchéité primaire 15 est placée en dépression, c'est-à-dire à une pression inférieure à la pression atmosphérique. La phase gazeuse de l'espace additionnel 50 est avantageusement placée à une pression absolue inférieure à 10⁻¹ Pa, de préférence inférieure à 10⁻² Pa, par exemple de l'ordre de 10⁻³ Pa. Pour ce faire, l'espace additionnel 50 est relié à une pompe à vide.

Selon une autre variante de réalisation, l'espace additionnel 50 est balayé par un gaz inerte. Le gaz inerte est, par exemple, de l'Hélium qui présente une température de liquéfaction inférieure à celle de l'hydrogène, ce qui permet d'éviter au gaz inerte de se condenser dans l'espace additionnel 50. Pour ce faire, l'installation comporte un réservoir de gaz inerte associé à un circuit d'inertage qui est relié à l'espace additionnel 50 et à un analyseur de gaz qui est configuré pour détecter une présence du gaz stocké dans la cuve, par exemple l'hydrogène, parmi le gaz inerte circulant dans l'espace additionnel 50. Un tel balayage de gaz inerte permet ainsi de détecter des fuites de la couche 49 de la membrane d'étanchéité primaire 15.

La [fig.12] illustre une paroi d'une cuve étanche et thermiquement isolante selon un quatrième mode de réalisation. Ce mode de réalisation diffère de ceux décrits ci-dessus en ce que la barrière thermiquement isolante primaire 14 comporte en outre des éléments isolants 51 qui présentent une structure poreuse à cellules ouvertes et qui sont disposés entre la couverture d'isolation multicouche radiative 47 et la membrane d'étanchéité secondaire 13.

De tels éléments isolants 51 ont plusieurs fonctionnalités. En premier lieu, ils permettent de diminuer encore davantage la température de la zone de la barrière thermiquement isolante primaire 14 dans laquelle est positionnée la couverture d'isolation multicouche radiative 47, ce qui augmente encore davantage son efficacité. En deuxième lieu, les éléments isolants 51 permettent également de limiter la dégradation des performances d'isolation thermiques lorsque la pression à l'intérieur de la barrière thermiquement isolante primaire 14 est supérieure aux valeurs de pression prescrites pour l'utilisation de la couverture d'isolation multicouche radiative 47 seule. En effet, les couvertures d'isolation multicouche radiative 47 du type précité présentent d'excellentes performances d'isolation thermique pour de faibles valeurs de pression, typiquement inférieures ou égales à 10⁻³ Pa mais plus elles sont soumises à des pressions supérieures au seuil précité et plus leurs performances se dégradent. De telles conditions de pression sont notamment susceptibles de se produire en cas de perte d'étanchéité de la membrane d'étanchéité primaire 15 ou de la membrane d'étanchéité secondaire 13 dégradant le niveau de dépression à l'intérieur la barrière thermiquement isolante primaire 14 ou lors de la mise à froid de la cuve tant que le gaz inerte contenu dans la barrière thermiquement isolante primaire 14 ne s'est pas entièrement condensé à l'état solide ou encore lorsque le taux de remplissage de la cuve est faible, par exemple lors d'un voyage retour d'un navire alors que la cuve ne comporte qu'un talon de gaz liquéfié. Les éléments isolants 51 permettent également de réduire les capacités d'activation de flux convectifs à l'intérieur de la barrière thermiquement isolante primaire 14. En troisième lieu, les éléments isolants 51constituent des surfaces de réception des solides issus de la condensation solide du ou des gaz inertes contenus dans la barrière thermiquement isolante primaire 14, ce qui permet de limiter les contraintes mécaniques susceptibles de s'exercer sur les autres éléments de la paroi 11 et notamment sur les éléments porteurs 30, la couverture d'isolation multicouche radiative 47 et les membranes d'étanchéité secondaire 13 et primaire 15.

Les éléments isolants 51 sont, par exemple, choisis parmi la laine de verre, la laine de roche, l'ouate de polyester, les mousses polymères à cellules ouvertes, telles que la mousse polyuréthane à cellules ouvertes, et les mousses de mélamine. De manière avantageuse, les éléments isolants 51 sont réalisés en laine de verre. Les éléments isolants 51 sont, avantageusement, conditionnés sous la forme de panneaux ayant une tenue structurelle leur permettant d'être manipulés facilement.

Dans le mode de réalisation représenté sur la [fig.12], les éléments isolants 51 occupent tout l'espace entre la couverture d'isolation multicouche radiative 47 et la membrane d'étanchéité secondaire 13. La barrière thermiquement isolante secondaire comporte en outre un ou plusieurs organes de rétention permettant de limiter le déplacement des éléments isolants 51 en direction de la membrane d'étanchéité primaire 15 et évitant ainsi que ceux-ci ne compriment la couverture d'isolation multicouche radiative 47 et ne dégradent ainsi ses performances.

L'organe de rétention comporte ici une couche textile de rétention 52, par exemple réalisée avec des fibres de polymère, telles que des fibres de polyester, ou des fibres de verre. La couche textile de rétention 52 est fixée aux éléments porteurs 30. Cette couche textile de rétention 52 peut être fixée aux éléments porteurs par tout moyen et notamment par collage. Sur la [fig.12], la couche textile de rétention 52 est fixée aux éléments porteurs 30 au moyen de collerettes 53 qui sont, d'une part, fixées aux éléments porteurs 30 et, d'autre part, fixées à la couche textile de rétention 52.

Dans un tel mode de réalisation, la couverture d'isolation multicouche radiative 47 peut être fixée à la couche textile de rétention 52, au moyen de zones de collage, de coutures ou d'agrafes régulièrement réparties. Ceci permet ainsi d'éviter que la couverture d'isolation multicouche radiative 47 soit directement fixée aux éléments porteurs 30 et permet ainsi de réduire les ponts thermiques par conduction. Ceci permet également d'assurer un bon positionnement de la couverture d'isolation multicouche radiative 47, en limitant ses plis et en assurant son maintien notamment lorsque le niveau de pression dans la barrière thermiquement isolante primaire 14 n'est pas homogène et qu'il existe un excédent de pression entre la couverture d'isolation multicouche radiative 47 et la membrane d'étanchéité secondaire 13.

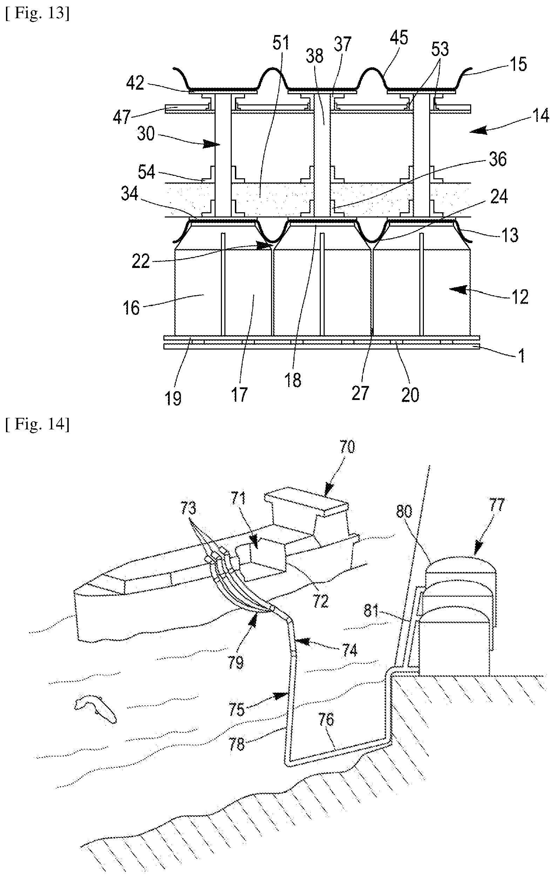

Selon une variante de réalisation représentée sur la [fig.13], les organes de rétention sont formés par des collerettes 54 fixées aux éléments porteurs 30 et contre lesquelles viennent en butée la face interne des éléments isolants 51.

On observe également, dans la variante de réalisation de la [fig.13], que les éléments isolants 51 présentent une épaisseur inférieure à la distance, selon la direction d'épaisseur de la paroi 11, entre la membrane d'étanchéité secondaire 13 et la couverture d'isolation multicouche radiative 47. En d'autres termes, un espace vide est présent entre les éléments isolants 51 et la couverture d'isolation multicouche radiative 47. Ceci permet de réduire la quantité d'éléments isolants 51 utilisée et contribue ainsi à réduire les coûts de la cuve sans dégrader trop significativement les performances d'isolation thermique de la barrière thermiquement isolante primaire 14, notamment lorsque la pression à l'intérieur de la barrière thermiquement isolante primaire 14 est supérieure à la valeur de pression prescrite.

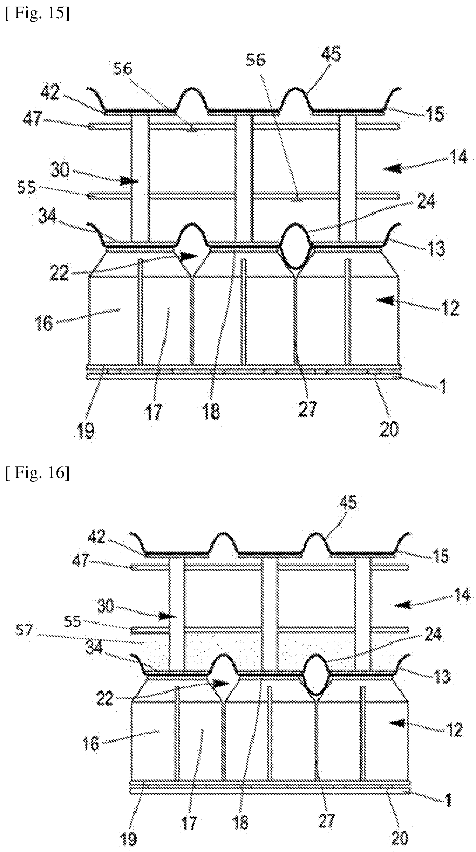

La [fig.15] illustre encore une autre variante de réalisation. Ce mode de réalisation diffère de celui décrit ci-dessus en relation avec la [fig.10] en ce qu'il comporte plusieurs couvertures d'isolation multicouche radiative 47, 55. Dans la variante de réalisation représentée, la barrière thermiquement isolante primaire 14 comporte deux couvertures d'isolation multicouche radiative 47, 55 qui sont espacées l'une de l'autre selon la direction d'épaisseur de la paroi. Selon un exemple de réalisation, les deux couvertures d'isolation multicouche radiative 47, 55 sont espacées dans la direction d'épaisseur de la paroi d'une distance comprise entre 30 et 160 mm. La présence de plusieurs couvertures d'isolation multicouche radiative 47, 55 permet de réduire encore davantage les transferts de chaleur par rayonnement thermique.

Dans ce mode de réalisation, chaque couverture d'isolation multicouche radiative 47, 55 est constituée de plusieurs portions qui sont fixées les unes aux autres par des moyens de fixation 56, tels que des bandes de fixation du type velours-crochet. En outre, de manière avantageuse, afin de limiter les ponts thermiques, les bandes de fixation des deux couvertures d'isolation multicouche radiative 47, 55 sont décalées les unes des autres, c'est-à-dire qu'elles ne sont pas positionnées entre les deux mêmes rangées d'éléments porteurs 30.

La [fig.16] illustre encore un autre mode de réalisation. Comme dans le mode de réalisation de la [fig.15], la barrière thermiquement isolante primaire 14 comporte deux couvertures d'isolation multicouche radiative 47, 55 qui sont espacées l'une de l'autre selon la direction d'épaisseur de la paroi. Toutefois, la barrière thermiquement isolante primaire 14 comporte, en outre, des éléments isolants 57 qui présentent une structure poreuse à cellules ouvertes et qui sont disposés entre la couverture d'isolation multicouche radiative 55 la plus externe et la membrane d'étanchéité secondaire 13. De tels éléments isolants 57 présentent des fonctionnalités identiques aux éléments isolants 51 décrits ci-dessus en relation avec les figures 12 et 13.

Les éléments isolants 57 sont, par exemple, choisis parmi la laine de verre, la laine de roche, l'ouate de polyester, les mousses polymères à cellules ouvertes, telles que la mousse polyuréthane à cellules ouvertes, et les mousses de mélamine. De manière avantageuse, les éléments isolants 57 sont réalisés en laine de verre. Les éléments isolants 57 sont, avantageusement, conditionnés sous la forme de panneaux ayant une tenue structurelle leur permettant d'être manipulés facilement.

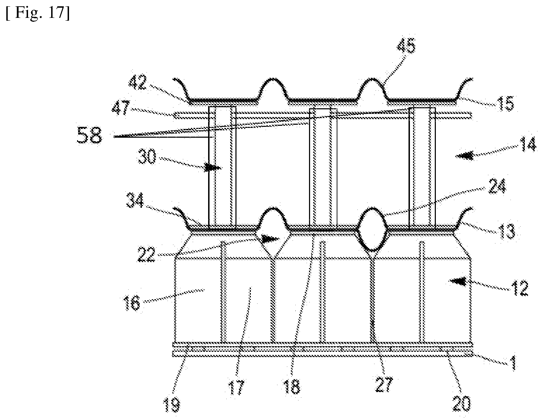

La [fig.17] illustre encore un autre mode de réalisation. Ce mode de réalisation diffère du mode de réalisation décrit ci-dessus en relation avec la [fig.10] en ce que chacun des piliers 38 des éléments porteurs 30 est au moins partiellement revêtu avec un revêtement d'isolation radiative 58 qui entoure ledit pilier 38. Un tel revêtement d'isolation radiative 58 limite l'absorption par les piliers des rayonnements réfléchis par la couverture d'isolation multicouche radiative 47.

Le revêtement d'isolation radiative 58 s'étend au moins depuis l'extrémité interne du pilier 38 jusqu'à la couverture d'isolation multicouche radiative 47. De manière avantageuse, le revêtement d'isolation radiative 58 s'étend jusqu'à l'extrémité externe du pilier 38. Le revêtement d'isolation radiative 58 peut être collé sur le pilier ou adhéré directement à celui-ci. De manière alternative, il peut également être fixé entre l'embase interne 37 et l'embase externe 36. Dans des modes de réalisation non représentés, le revêtement d'isolation radiative 58 est en appui et/ou fixé sur une couche textile de rétention 52, telle que représentée sur la [fig.12] ou sur des collerettes 54, telles que représentées sur la [fig.13]. Le revêtement d'isolation radiative 58 est choisi parmi les matériaux désignés par le sigle SLI pour « Single Layer Insulation » en langue anglaise qui comporte par exemple, une feuille en matériau polymère, tel que du Polyimide, ou du polyéthylène, revêtue d'un métal, tel que l'aluminium, les matériaux désignés par le sigle MLI et décrits précédemment et une couche préalablement déposée sur le pilier 37 et comprenant un liant et des particules d'aluminium.

En référence à la [fig.14], une vue écorchée d'un navire 70 montre une cuve étanche et thermiquement isolante 71 de forme générale prismatique montée dans la double coque 72 du navire. La paroi de la cuve 71 comporte une membrane d'étanchéité primaire destinée à être en contact avec le gaz liquéfié, préférentiellement de l'hydrogène liquide, contenu dans la cuve, une membrane d'étanchéité secondaire agencée entre la membrane d'étanchéité primaire et la double coque 72 du navire, et deux barrières thermiquement isolantes agencées respectivement entre la membrane d'étanchéité primaire et la membrane d'étanchéité secondaire et entre la membrane d'étanchéité secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de gaz liquéfié depuis ou vers la cuve 71.

La [fig.14] représente également un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits d'hydrogéniers. Une conduite de liaison non représentée s'étend à l'intérieur de la tour 78. Le poste de chargement et de déchargement 75 permet le chargement et le déchargement de l'hydrogénier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire hydrogénier 70 à grande distance de la côte pendant les opérations de chargement et de déchargement.

Pour engendrer la pression nécessaire au transfert du gaz liquéfié, on peut soit mettre en œuvre des pompes embarquées dans le navire 70 et/ou des pompes équipant l'installation à terre 77 et/ou des pompes équipant le poste de chargement et de déchargement 75 soit autoriser une montée en pression dans l'espace intérieur de la cuve sous l'effet de l'évaporation du gaz liquéfié stocké dans la cuve.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

Il apparaîtra plus généralement à l'Homme du métier que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'Homme du métier se basant sur ses connaissances générales.

## Revendications

1. Paroi (11) pour une cuve étanche et thermiquement isolante de stockage d'un gaz liquéfié, la paroi (11) comportant successivement, selon une direction d'épaisseur, une barrière thermiquement isolante secondaire (12) qui repose contre une structure porteuse (1), une membrane d'étanchéité secondaire (13) qui repose contre la barrière thermiquement isolante secondaire (12), une barrière thermiquement isolante primaire (14) qui repose contre la membrane d'étanchéité secondaire (13) et une membrane d'étanchéité primaire (15) qui repose contre la barrière thermiquement isolante primaire (14) et est destinée à être en contact avec le gaz liquéfié contenu dans la cuve, la membrane d'étanchéité primaire (15) comportant une première série d'ondulations (45a) présentant des premières ondulations parallèles les unes aux autres et une deuxième séries d'ondulations (45b) présentant des deuxièmes ondulations parallèles les unes aux autres et perpendiculaires aux premières ondulations, la membrane d'étanchéité primaire (15) comportant une pluralité de zones planes (46) qui sont chacune définies entre deux premières ondulations adjacentes et entre deux deuxièmes ondulations adjacentes ; la barrière thermiquement isolante primaire (14) comportant au moins une première rangée d'éléments porteurs comportant successivement, selon une direction parallèle aux premières ondulations, au moins un premier, un deuxième et un troisième éléments porteurs (30) qui sont fixés à la barrière thermiquement isolante secondaire (12) et qui s'élèvent selon la direction d'épaisseur, **caractérisé en ce qu'** aucun autre élément porteur de la première rangée d'éléments porteurs n'est interposé entre le premier et le deuxième éléments porteurs et entre le deuxième et le troisième éléments porteurs ; le premier, le deuxième et le troisième éléments porteurs (30) étant respectivement fixés à un premier, un deuxième et un troisième plateaux internes (42), la pluralité de zones planes (46) comportant successivement, selon la direction parallèle aux premières ondulations, une première, une deuxième et une troisième zones planes qui sont respectivement soudées en appui contre le premier, le deuxième et le troisième plateaux internes (42), aucune autre zone plane de la pluralité de zones planes (46) n'étant interposée entre la première et la deuxième zones planes et entre la deuxième et la troisième zones planes.

2. Paroi (11) selon la revendication 1, dans laquelle le premier, le deuxième et le troisième plateaux internes sont respectivement en contact contre plus de 70 % de la surface de la première, deuxième et troisième zones planes (46).

3. Paroi (11) selon la revendication 1 ou 2, dans laquelle la membrane d'étanchéité primaire (15) comporte une pluralité de tôles métalliques ondulées (44), chaque tôle métallique ondulée (44) présentant des bords qui sont chacun soudés par recouvrement à un bord d'une tôle métallique ondulée adjacente (44), la première, la deuxième et la troisième zones planes (46) étant formées par deux bords de deux tôles métalliques ondulées (44) adjacentes.

4. Paroi (11) selon l'une quelconque des revendications 1 à 3, dans laquelle la barrière thermiquement isolante primaire (14) comporte au moins une deuxième rangée d'éléments porteurs comportant un quatrième, un cinquième et un sixième éléments porteurs qui sont fixés à la barrière thermiquement isolante secondaire (12) et qui s'élèvent selon la direction d'épaisseur de la paroi (11), le quatrième, le cinquième et le sixième éléments porteurs étant alignés selon une direction parallèle aux premières ondulations et étant respectivement fixés à un quatrième, un cinquième et un sixième plateaux internes, le quatrième, le cinquième et le sixième éléments porteurs étant respectivement alignés selon une direction parallèle au deuxièmes ondulations avec le premier, le deuxième et le troisième éléments porteurs, la pluralité de zones planes comportant une quatrième, une cinquième et une sixième zones planes qui sont respectivement en appui contre le quatrième, le cinquième et le sixième plateaux internes.

5. Paroi (11) selon la revendication 4, dans laquelle la quatrième, la cinquième et la sixième zones planes sont respectivement soudées aux quatrième, cinquième et sixièmes plateaux internes.

6. Paroi (11) selon l'une quelconque des revendications 1 à 5, dans laquelle chacun des premier, deuxième et troisième éléments porteurs (30) est respectivement fixé à un premier, un deuxième et un troisième plateaux externes (34), chacun des premier, deuxième et troisième plateaux externes (34) étant fixé à la barrière thermiquement isolante secondaire (12) et plaquant la membrane d'étanchéité secondaire (13) contre la barrière thermiquement isolante secondaire (12).

7. Paroi (11) selon la revendication 6, dans laquelle la membrane d'étanchéité secondaire (13) comporte une première série d'ondulations (24a) présentant des premières ondulations parallèles les unes aux autres et une deuxième séries d'ondulations (24b) présentant des deuxièmes ondulations parallèles les unes aux autres et perpendiculaires aux premières ondulations, la membrane d'étanchéité secondaire (13) comportant une pluralité de zones planes (28) qui sont chacune définies entre deux premières ondulations adjacentes et entre deux deuxième ondulations adjacentes de la membrane d'étanchéité secondaire (13), le premier, le deuxième et le troisième plateaux externes (34) étant chacun plaqués contre l'une des zones planes (28) de la membrane d'étanchéité secondaire (13).

8. Paroi (11) selon la revendication 7, dans laquelle la première série d'ondulations (24a) et la deuxième série d'ondulations (24b) de la membrane d'étanchéité secondaire (13) sont respectivement en regard, selon la direction d'épaisseur, de la première série d'ondulations (45) et de la deuxième série d'ondulations (45b) de la membrane d'étanchéité primaire (15).

9. Paroi (11) selon la revendication 7 ou 8, dans laquelle chacun des premier, deuxième et troisième plateaux externes (34) est fixé à la barrière thermiquement isolante secondaire (12) au moyen d'un dispositif d'ancrage primaire (29) comportant un goujon (31) qui est fixé à un panneau isolant (16) de la barrière thermiquement isolante secondaire (12) et qui traverse un orifice de la membrane d'étanchéité secondaire (13) et un orifice ménagé dans l'un des premier, deuxième et troisième plateaux externes (34), le goujon (31) présentant une collerette (33) se développant radialement qui est soudée à la membrane d'étanchéité secondaire (13) tout autour dudit orifice de la membrane d'étanchéité secondaire (13), le dispositif d'ancrage primaire (29) comportant en outre un écrou (35) qui est vissé sur le goujon (31) et qui maintient ledit premier, deuxième ou troisième plateau externe (34) contre la membrane d'étanchéité secondaire (13).

10. Paroi (11) selon l'une quelconque des revendications 1 à 9, dans laquelle le premier, le deuxième et le troisième éléments porteurs (30) comportent chacun une embase externe (36), une embase interne (37) et un pilier (38), chacune des embases externe (36) et interne (37) présentant un manchon (39) coopérant par emboîtement avec l'une des extrémités du pilier (38) et une collerette d'appui (40) s'étendant radialement depuis une extrémité du manchon (39).

11. Paroi (11) selon la revendication 10, dans laquelle chaque pilier (38) est réalisé dans un matériau composite comportant des fibres et une matrice.

12. Paroi (11) selon l'une quelconque des revendications 10 à 11, dans lequel le pilier (38) est au moins partiellement revêtu avec un revêtement d'isolation radiative (58) qui entoure ledit pilier (38).

13. Paroi (11) selon l'une quelconque des revendications 1 à 12, dans laquelle la barrière thermiquement isolante primaire (14) présente une phase gazeuse à une pression absolue inférieure à 1 Pa.

14. Paroi (11) selon la revendication 13, dans laquelle la barrière thermiquement isolante primaire (14) comporte une couverture d'isolation multicouche radiative (47) qui présente des ouvertures au travers desquelles passent le premier, le deuxième et le troisième éléments porteurs (30) et qui s'étend orthogonalement à la direction d'épaisseur de la paroi (11).

15. Paroi (11) selon l'une quelconque des revendications 1 à 14, dans laquelle la membrane d'étanchéité primaire (15) comporte deux couches (48, 49) de tôles métalliques ondulées (44) superposées l'une sur l'autre, des éléments d'entretoises étant interposés entre les deux couches (48, 49).

16. Paroi (11) selon l'une quelconque des revendications 1 à 15, dans laquelle la barrière thermiquement isolante secondaire (12) comporte des panneaux isolants (16) ancrés à la structure porteuse (1).

17. Cuve étanche et thermiquement isolante comportant une pluralité de parois (11) selon l'une quelconque des revendications 1 à 16.

18. Navire (70) pour le transport d'un gaz liquéfié, le navire comportant une double coque (72) et une cuve (71) selon la revendication 17 disposée dans la double coque.

## Patentansprüche

1. Wand (11) für ein dichtes und wärmeisolierendes Gefäß zur Lagerung von Flüssiggas, wobei die Wand (11) in Dickenrichtung nacheinander eine sekundäre wärmeisolierende Sperre (12), die an einer tragenden Struktur (1) anliegt, eine sekundäre Dichtungsmembran (13), die an der sekundären wärmeisolierenden Sperre (12) anliegt, eine primäre wärmeisolierende Sperre (14), die an der sekundären Dichtungsmembran (13) anliegt, und eine primäre Dichtungsmembran (15), die an der primären wärmeisolierenden Sperre (14) anliegt und dazu bestimmt ist, mit dem im Behälter enthaltenen Flüssiggas in Kontakt zu stehen, umfasst, wobei die primäre Dichtungsmembran (15) eine erste Reihe von Wellen (45a) mit ersten, zueinander parallelen Wellen und eine zweite Reihe von Wellen (45b) mit zweiten, zueinander parallelen und zu den ersten Wellen senkrechten Wellen aufweist, wobei die primäre Dichtungsmembran (15) eine Vielzahl von ebenen Bereichen (46) aufweist, die jeweils zwischen zwei benachbarten ersten Wellen und zwischen zwei benachbarten zweiten Wellen definiert sind;
wobei die primäre, wärmeisolierende Sperre (14) mindestens eine erste Reihe von Tragelementen umfasst, die in einer zu den ersten Wellen parallelen Richtung nacheinander mindestens ein erstes, ein zweites und ein drittes Tragelement (30) , die an der sekundären, wärmeisolierenden Sperre (12) befestigt sind und sich in Dickenrichtung erheben, aufweisen, **dadurch gekennzeichnet, dass** zwischen dem ersten und dem zweiten Tragelement und zwischen dem zweiten und dem dritten Tragelement kein weiteres Tragelement der ersten Reihe von Tragelementen angeordnet ist; wobei das erste, das zweite und das dritte Tragelement (30) jeweils an einer ersten, einer zweiten und einer dritten Innenplatte (42) befestigt sind, wobei die Vielzahl von ebenen Bereichen (46) nacheinander in paralleler Richtung zu den ersten Wellen einen ersten, einen zweiten und einen dritten ebenen Bereich aufweisen, die jeweils an der ersten, der zweiten und der dritten Innenplatte (42) angeschweißt sind, wobei zwischen dem ersten und dem zweiten ebenen Bereich und zwischen dem zweiten und dem dritten ebenen Bereich kein weiterer ebener Bereich der Vielzahl von ebenen Bereichen (46) angeordnet ist.

2. Wand (11) gemäß Anspruch 1, wobei die erste, zweite und dritte Innenplatte jeweils mit mehr als 70 % der Fläche des ersten, zweiten und dritten ebenen Bereichs (46) in Kontakt stehen.

3. Wand (11) gemäß Anspruch 1 oder 2, wobei die primäre Dichtungsmembran (15) eine Vielzahl von gewellten Metallblechen (44) umfasst, wobei jedes gewellte Metallblech (44) Kanten aufweist, die jeweils mit einer Kante eines benachbarten gewellten Metallblechs (44) überlappend verschweißt sind, wobei der erste, der zweite und der dritte ebene Bereich (46) durch zwei Kanten zweier benachbarter gewellter Metallbleche (44) gebildet werden.

4. Wand (11) gemäß einem der Ansprüche 1 bis 3, wobei die primäre wärmeisolierende Sperre (14) mindestens eine zweite Reihe von Tragelementen umfasst, die ein viertes, ein fünftes und ein sechstes Tragelement umfassen, die an der sekundären wärmeisolierenden Sperre (12) befestigt sind und sich in Dickenrichtung der Wand (11) erheben, wobei das vierte, fünfte und sechste Tragelement in einer Richtung parallel zu den ersten Wellen ausgerichtet und jeweils an einer vierten, fünften und sechsten Innenplatte befestigt sind, wobei das vierte, fünfte und sechste Tragelement jeweils in einer Richtung parallel zu den zweiten Wellen mit dem ersten, zweiten und dritten Tragelement ausgerichtet sind, wobei die Vielzahl von ebenen Bereichen einen vierten, fünften und sechsten ebenen Bereich umfasst, die jeweils an der vierten, fünften und sechsten Innenplatte anliegen.

5. Wand (11) gemäß Anspruch 4, wobei der vierte, fünfte und sechste ebene Bereich jeweils mit der vierten, fünften und sechsten Innenplatte verschweißt ist.

6. Wand (11) gemäß einem der Ansprüche 1 bis 5, wobei jedes der ersten, zweiten und dritten Tragelemente (30) jeweils an einer ersten, zweiten und dritten Außenplatte (34) befestigt ist, wobei jede der ersten, zweiten und dritten Außenplatten (34) an der sekundären wärmeisolierenden Sperre (12) befestigt ist und die sekundäre Dichtungsmembran (13) gegen die sekundäre wärmeisolierende Sperre (12) anliegt.

7. Wand (11) gemäß Anspruch 6, wobei die sekundäre Dichtungsmembran (13) eine erste Reihe von Wellen (24a) mit ersten, zueinander parallelen Wellen und eine zweite Reihe von Wellen (24b) mit zweiten, zueinander parallelen und zu den ersten Wellen senkrechten Wellen umfasst, wobei die sekundäre Dichtungsmembran (13) eine Vielzahl von ebenen Bereichen (28) umfasst, die jeweils zwischen zwei benachbarten ersten Wellen und zwischen zwei benachbarten zweiten Wellen der sekundären Dichtungsmembran (13) definiert sind, wobei die erste, die zweite und die dritte Außenplatte (34) jeweils an einer der ebenen Bereiche (28) der sekundären Dichtungsmembran (13) anliegen.

8. Wand (11) gemäß Anspruch 7, wobei die erste Reihe von Wellen (24a) und die zweite Reihe von Wellen (24b) der sekundären Dichtungsmembran (13) sich jeweils in Dickenrichtung der ersten Wellenreihe (45) und der zweiten Wellenreihe (45b) der primären Dichtungsmembran (15) gegenüberliegen.

9. Wand (11) gemäß Anspruch 7 oder 8, wobei jede der ersten, zweiten und dritten Außenplatten (34) mit Hilfe einer primären Verankerungsvorrichtung (29) an der sekundären wärmeisolierenden Sperre (12) befestigt ist, wobei die Verankerungsvorrichtung einen Bolzen (31) umfasst, der an einer Isolierplatte (16) der sekundären wärmeisolierenden Sperre (12) befestigt ist und eine Öffnung in der sekundären Dichtungsmembran (13) und eine Öffnung in einer der ersten, zweiten und dritten Außenplatten (34) durchquert, wobei der Bolzen (31) einen sich radial erstreckenden Kragen (33) aufweist, der rund um die Öffnung der sekundären Dichtungsmembran (13) mit dieser verschweißt ist, wobei die primäre Verankerungsvorrichtung (29) weiterhin eine Mutter (35) umfasst, die auf den Bolzen (31) geschraubt ist und die erste, zweite oder dritte Außenplatte (34) gegen die sekundäre Dichtungsmembran (13) hält.

10. Wand (11) gemäß einem der Ansprüche 1 bis 9, wobei das erste, zweite und dritte Tragelement (30) jeweils eine äußere Grundplatte (36), eine innere Grundplatte (37) und eine Säule (38) umfasst, wobei jede der äußeren (36) und inneren (37) Grundplatten eine Hülse (39) aufweist, die durch Ineinandergreifen mit einem der Enden der Säule (38) zusammenwirkt, sowie einen Stützflansch (40), der sich radial von einem Ende der Hülse (39) aus erstreckt.

11. Wand (11) gemäß Anspruch 10, wobei jede Säule (38) aus einem Verbundwerkstoff hergestellt ist, der Fasern und eine Matrix umfasst.

12. Wand (11) gemäß einem der Ansprüche 10 bis 11, wobei der Pfeiler (38) mindestens teilweise mit einer strahlungsisolierenden Beschichtung (58) versehen ist, die den Pfeiler (38) umgibt.

13. Wand (11) gemäß einem der Ansprüche 1 bis 12, wobei die primäre wärmeisolierende Sperre (14) eine Gasphase mit einem absoluten Druck von weniger als 1 Pa aufweist.

14. Wand (11) gemäß Anspruch 13, wobei die primäre wärmeisolierende Sperre (14) eine mehrschichtige strahlungsisolierende Abdeckung (47) umfasst, die Öffnungen aufweist, durch die das erste, zweite und dritte Tragelement (30) hindurchgehen, und die sich orthogonal zur Dickenrichtung der Wand (11) erstreckt.

15. Wand (11) gemäß einem der Ansprüche 1 bis 14, wobei die primäre Dichtungsmembran (15) zwei Schichten (48, 49) aus gewellten Metallblechen (44) umfasst, die übereinander angeordnet sind, wobei zwischen den beiden Schichten (48, 49) Abstandselemente angeordnet sind.

16. Wand (11) gemäß einem der Ansprüche 1 bis 15, wobei die sekundäre wärmeisolierende Sperre (12) Isolierplatten (16) umfasst, die an der Tragkonstruktion (1) verankert sind.

17. Dichtes und wärmeisolierendes Gefäß, das eine Vielzahl von Wänden (11) gemäß einem der Ansprüche 1 bis 16umfasst.

18. Schiff (70) zum Transport von Flüssiggas, wobei das Schiff einen Doppelhülle (72) und ein Gefäß (71) gemäß Anspruch 17 umfasst, das in der Doppelhülle angeordnet ist.

## Claims

1. A wall (11) for a sealed and thermally insulating storage tank for a liquefied gas, the wall (11) comprising successively, in a thickness direction, a secondary thermally insulating barrier (12) that bears against a load-bearing structure (1), a secondary sealing membrane (13) that bears against the secondary thermally insulating barrier (12), a primary thermally insulating barrier (14) that bears against the secondary thermally insulating barrier (13) and a primary sealing membrane (15) that bears against the primary thermally insulating barrier (14) and is intended to be in contact with the liquefied gas contained in the tank, the primary sealing membrane (15) comprising a first series of corrugations (45a) having first corrugations parallel to each other and a second series of corrugations (45b) having second corrugations parallel to each other and perpendicular to the first corrugations, the primary sealing membrane (15) comprising a plurality of flat zones (46) that are each defined between two adjacent first corrugations and between two adjacent second corrugations, the primary thermally insulating barrier (14) comprising at least a first row of load-bearing members comprising successively, in a direction parallel to the first corrugations, at least first, second and third load-bearing members (30) that are fastened to the secondary thermally insulating barrier (12) and that extend in the thickness direction, **characterized in that** no other load-bearing member of the first row of load-bearing members is interposed between the first and second load-bearing members and between the second and third load-bearing members; the first, second and third load-bearing members (30) being respectively fastened to first, second and third inner plates (42), the plurality of flat zones (46) comprising successively, in a direction parallel to the first corrugations, first, second and third flat zones that are respectively welded against the first, second and third inner plates (42), no other flat zone of the plurality of flat zones (46) being interposed between the first and second flat zones and between the second and third flat zones.

2. The wall (11) as claimed in claim 1, in which the first, second and third inner plates are respectively in contact with more than 70% of the surface area of the first, second and third flat zones (46).

3. The wall (11) as claimed in claim 1 or 2, in which the primary sealing membrane (15) comprises a plurality of corrugated metal sheets (44), each corrugated metal sheet (44) having edges that are each lap-welded to an edge of an adjacent corrugated metal sheet (44), the first, second, and third flat zones (46) being formed by two edges of two adjacent corrugated metal sheets (44).

4. The wall (11) as claimed in any one of claims 1 to 3, in which the primary thermally insulating barrier (14) comprises at least a second row of load-bearing members comprising fourth, fifth and sixth load-bearing members that are fastened to the secondary thermally insulating barrier (12) and that extend in the thickness direction of the wall (11), the fourth, fifth and sixth load-bearing members being aligned in a direction parallel to the first corrugations and being respectively fastened to fourth, fifth and sixth inner plates, the fourth, fifth and sixth load-bearing members being respectively aligned in a direction parallel to the second corrugations with the first, second and third load-bearing members, the plurality of flat zones comprising fourth, fifth and sixth flat zones that bear respectively against the fourth, fifth and sixth inner plates.

5. The wall (11) as claimed in claim 4, in which the fourth, fifth and sixth flat zones are respectively welded to the fourth, fifth and sixth inner plates.

6. The wall (11) as claimed in any one of claims 1 to 5, in which each of the first, second, and third load-bearing members (30) is fastened to first, second, and third outer plates (34), respectively, each of the first, second, and third outer plates (34) being fastened to the secondary thermally insulating barrier (12) and pressing the secondary sealing membrane (13) against the secondary thermally insulating barrier (12).

7. The wall (11) as claimed in claim 6, in which the secondary sealing membrane (13) comprises a first series of corrugations (24a) having first corrugations parallel to each other and a second series of corrugations (24b) having second corrugations parallel to each other and perpendicular to the first corrugations, the secondary sealing membrane (13) having a plurality of flat zones (28) that are each defined between two adjacent first corrugations and between two adjacent second corrugations of the secondary sealing membrane (13), each of the first, second and third outer plates (34) being pressed against one of the flat zones (28) of the secondary sealing membrane (13).

8. The wall (11) as claimed in claim 7, in which the first series of corrugations (24a) and the second series of corrugations (24b) of the secondary sealing membrane (13) are respectively opposite, in the thickness direction, the first series of corrugations (45) and the second series of corrugations (45b) of the primary sealing membrane (15).

9. The wall (11) as claimed in claim 7 or 8, in which each of the first, second and third outer plates (34) is fastened to the secondary thermally insulating barrier (12) by means of a primary anchoring device (29) comprising a pin (31) that is fastened to an insulating panel (16) of the secondary thermally insulating barrier (12) and passes through an orifice in the secondary sealing membrane (13) and an orifice in one of the first, second and third outer plates (34), the pin (31) having a radially extending flange (33) that is welded to the secondary sealing membrane (13) about said orifice in the secondary sealing membrane (13), the primary anchoring device (29) further comprising a nut (35) that is screwed onto the pin (31) and holds said first, second or third outer plate (34) against the secondary sealing membrane (13).

10. The wall (11) as claimed in any one of claims 1 to 9, in which the first, second and third load-bearing members (30) each comprise an outer base (36), an inner base (37) and a pillar (38), the outer base (36) and the inner base (37) each having a sleeve (39) cooperating by fitting with one of the ends of the pillar (38) and a support flange (40) extending radially from one end of the sleeve (39).

11. The wall (11) as claimed in claim 10, in which each pillar (38) is made of a composite material comprising fibers and a matrix.

12. The wall (11) as claimed in any one of claims 10 to 11, in which the pillar (38) is at least partially lined with a radiant insulation coating (58) that surrounds said pillar (38).

13. The wall (11) as claimed in any one of claims 1 to 12, in which the primary thermally insulating barrier (14) has a gas phase at an absolute pressure of less than 1 Pa.

14. The wall (11) as claimed in claim 13, in which the primary thermally insulating barrier (14) comprises one radiant multi-layer insulating covering (47) that has openings through which the first, second and third load-bearing members (30) pass and that extends orthogonally to the thickness direction of the wall (11).

15. The wall (11) as claimed in any one of claims 1 to 14, in which the primary sealing membrane (15) comprises two layers (48, 49) of corrugated metal sheets (44) stacked on each other, with spacer elements interposed between the two layers (48, 49).

16. The wall (11) as claimed in any one of claims 1 to 15, in which the secondary thermally insulating barrier (12) comprises insulating panels (16) anchored to the load-bearing structure (1).

17. The sealed and thermally insulating tank comprising a plurality of walls (11) as claimed in any one of claims 1 to 16.

18. A ship (70) used to transport a liquefied gas, the ship having a double hull (72) and a tank (71) as claimed in claim 17 placed inside the double hull. I
